(19) Europäisches Patentamt

European Patent Office

Office européen des brevets

(11) EP 0 737 646 B1

(12) EUROPEAN PATENT SPECIFICATION

(45) Date of publication and mention
of the grant of the patent:
06.09.2000 Bulletin 2000/36

(51) Int Cl.⁷: C01B 3/38, C01B 31/18,
B01J 20/04, B01J 20/08,
C01B 3/56, B01J 8/04,
C01F 7/00

(21) Application number: 96105630.6

(22) Date of filing: 10.04.1996

(54) **Process for operating equilibrium-controlled reactions**

Verfahren zum Betreiben von gleichgewichtskontrollierten Reaktionen

Méthode pour opérer des réactions contrôlées par l'équilibre

(84) Designated Contracting States:
BE DE ES FR GB IT NL

(30) Priority: 10.04.1995 US 419317
08.04.1996 US 624147

(43) Date of publication of application:
16.10.1996 Bulletin 1996/42

(60) Divisional application: 00101685.6 / 1 006 079

(73) Proprietor: AIR PRODUCTS AND CHEMICALS,
INC.
Allentown, PA 18195-1501 (US)

(72) Inventors:
• Nataraj, Shankar
Allentown, PA 18103 (US)
• Carvill, Brian Thomas
Orefield, PA 18069 (US)
• Hufton, Jeffrey Raymond
Fogelsville, PA 18051 (US)
• Mayorga, Steven Gerard
Allentown, PA 18103 (US)
• Gaffney, Thomas Richard
Allentown, PA 18103 (US)
• Brzozowski, Jeffrey Richard
Bethlehem, PA 18018 (US)

(74) Representative: Sandmair, Kurt, Dr. Dr.
Patentanwälte
Schwabe, Sandmair, Marx
Stuntzstrasse 16
81677 München (DE)

• E. ALPAY ET AL.: "Combined reaction and separation in pressure swing processes" CHEMICAL ENGINEERING SCIENCE, vol. 49, no. 24b, 1994, GREAT BRITAIN, pages 5845-5864, XP000675371
• H. TAGAYA ET AL.: "Adsorption of CO2 into hydrotalcite-like compound" BULL. YAMAGATA UNIV., vol. 22, no. 1, 1 February 1992, JAPAN, pages 21-26, XP002059019
• PATENT ABSTRACTS OF JAPAN vol. 018, no. 357 (C-1221), 6 July 1994 & JP 06 091126 A (KAWASAKI HEAVY IND LTD;OTHERS: 01), 5 April 1994,
• GREY I E ET AL: "FORMATION AND CHARACTERIZATION OF NEW MAGNESIUM ALUMINUM HYDROXYCARBONATES" JOURNAL OF SOLID STATE CHEMISTRY, vol. 94, 1 January 1991, pages 244-253, XP000472778
• S. MIYATA: "Physico chemical properties of synthetic hydrotalcites in relation to composition" CLAYS AND CLAY MINERALS, vol. 28, no. 1, 1980, pages 50-56, XP002059020
• PATENT ABSTRACTS OF JAPAN vol. 013, no. 056 (C-566), 8 February 1989 & JP 63 248701 A (JAPAN ATOM ENERGY RES INST), 17 October 1988,
• CHUN HAN ET AL: "SIMULTANEOUS SHIFT REACTION AND CARBON DIOXIDE SEPARATION FOR THE DIRECT PRODUCTION OF HYDROGEN" CHEMICAL ENGINEERING SCIENCE, vol. 49, no. 24B, 1 January 1994, pages 5875-5883, XP000534176

(56) References cited:
EP-A- 0 218 285      US-A- 1 740 139
US-A- 5 254 368

- **D. W. GREEN ET AL.: "Perry's chemical engineers' handbook, sixth edition" 1985 , MC-GRAW HILL , NEW YORK, USA XP002032883 * page 9-76 - page 9-81 ***

- **B.T.CARVILL ET AL.: "Sorption-enhanced reaction process" AICHE JOURNAL, vol. 42, no. 10, October 1996, USA, pages 2765-2772, XP000674846**

**Description**

## TECHNICAL FIELD OF THE INVENTION

The present invention is a cyclic process for operating equilibrium controlled reactions in a system which comprises a plurality of reactors operated in a predetermined timed sequence wherein the heating and cooling requirements in a moving reaction mass transfer zone within each reactor are provided by indirect heat exchange with a fluid capable of phase change at temperatures maintained in each reactor during sorpreaction, depressurization, purging and pressurization steps.

## BACKGROUND OF THE INVENTION

The chemical industry performs numerous equilibrium controlled reactions to manufacture a wide range of chemical raw materials, intermediates and products. Product yield obtained in such equilibrium controlled reactions is typically limited by the thermodynamic equilibrium of the reaction. Therefore, such reactions are typically operated at an elevated temperature for endothermic reactions or at a reduced temperature for exothermic reactions in order to shift equilibrium toward the product direction. Thus, the chemical industry has been searching for improved processes for operating equilibrium controlled reactions at reduced temperatures for endothermic reactions wherein product yield is not substantially diminished due to unfavorable thermodynamic equilibrium constants.

Representative equilibrium controlled reactions include methane and hydrocarbon steam reforming reactions which are used to manufacture hydrogen or synthesis gas, the water gas shift reaction for converting CO to $CO_2$, as well as the reverse water gas shift reaction for converting $CO_2$ to CO. Some of these reactions are typically carried out at relatively high temperatures to shift the equilibrium toward the product direction as well as to obtain relatively faster reaction kinetics. Significant efforts have been described in the literature to Improve reaction kinetics by identifying new catalysts and by controlling process operating conditions. Additionally, the concept of removing a product from a reaction zone to increase product conversion is well known.

Representative processes for operating equilibrium controlled reactions include an article by Vaporciyan and Kadlec (AlChE Journal, Vol. 33, No. 8, August 1987) which discloses a unit operation comprising a rapid pressure swing cycle in a catalytic-adsorbent bed to effect both continuous gas-phase reaction and separation. The hybrid device combines features of a pressure swing adsorber with those of a flow-forced catalytic reactor.

Westerterp and coworkers (Hydrocarbon Processing) p. 69 (November 1988) disclose two process schemes for improving conversion of hydrogen and carbon monoxide to methanol. The first embodiment employs a Gas-Solid-Solid Trickle Flow Reactor (GSSTFR) wherein a solid adsorbent is trickled through a packed bed reactor to remove methanol from the reaction zone which results in increased production of methanol. The adsorbent saturated with methanol is collected on a continuous basis using multiple storage tanks wherein the methanol is desorbed by reducing the pressure. The second embodiment employs a Reactor System with Interstage Product Removal (RSIPR) wherein methanol is synthesized in several stages and removed utilizing a liquid solvent High conversion of methanol per pass is achieved in a series of adiabatic or isothermal fixed bed reactors. Product is selectively removed in absorbers situated between the respective reactor stages.

Prior art processes for conducting simultaneous reaction and adsorption steps have not achieved commercial success because product flow rates do not remain sufficiently constant and the desired products are present in unacceptably low concentrations with respect to the undesired reaction products, unreacted feedstock and purge fluids. Industry is searching for a process for operating equilibrium controlled reactions which can be operated in continuous mode at reduced reaction temperatures wherein a reaction product can be produced in substantially pure form at high conversion, under relatively constant flow rate and at feedstock pressure.

Chem. Eng. Sci. 49(24b) pages 5845 to 5864 teaches a reaction process which utilises a reactor which is loaded with a reaction catalyst and adsorbent. Three steps of pressurisation, product release and countercurrent depressurisation constitute a simple cycle of the described process. In accordance with this article, other steps can also be incorporated into said simple cycle, so as to enhance product recovery or bed regeneration. For the letter, one such step can be a countercurent purge step.

## BRIEF SUMMARY OF THE INVENTION

The present invention relates to a continuous process for operating equilibrium controlled reactions which overcomes problems associated with prior art processes wherein product flow rates do not remain relatively constant and the desired product is present in unacceptably low concentrations with respect to other reaction products, unreacted feedstock as well as the purge and rinse fluids used to desorb the desired product from the adsorbent residing in the reactor.

Applicants have overcome such problems by developing a cyclic process, operated under isothermal conditions, which utilizes a plurality of reactors operated in a predetermined timed sequence wherein the heating and cooling requirements in a moving reaction mass transfer zone within each reactor are provided by indirect heat exchange with a fluid capable of phase change at temperatures maintained in each reactor during sorpreaction, depressurization, purging and pressurization steps. The following five steps of the general embodiment are performed in each reactor during a process cycle.

The first step of the process comprises reacting a feedstock at a first pressure in a first reactor containing an admixture of an adsorbent and a catalyst suitable for conducting the equilibrium controlled reaction under reaction conditions sufficient to convert the feedstock into a more adsorbable product which is selectively adsorbed by the adsorbent and a less adsorbable product and withdrawing a stream which is enriched in the less adsorbable product and depleted in the more adsorbable product as well as unreacted feedstock.

The second step comprises countercurrently depressurizing the first reactor to a second pressure by withdrawing a mixture comprising unreacted feedstock, a portion of the less adsorbable product and a portion of the more adsorbable product.

The third step comprises countercurrently purging the first reactor at the second pressure with a weakly adsorbing purge fluid with respect to the adsorbent to desorb the more adsorbable product from the adsorbent and withdrawing a mixture comprising unreacted feedstock, a portion of the more adsorbable product and a portion of the less adsorbable product.

The fourth step comprises countercurrently purging the first reactor at the second pressure with the less adsorbable product to desorb the weakly adsorbing purge fluid and withdrawing a mixture comprising the weakly adsorbing purge fluid, a portion of the more adsorbable product and a portion of the less adsorbable product.

The fifth step comprises countercurrently pressurizing the first reactor from the second pressure to the first pressure with the less adsorbable product prior to commencing another process cycle within the first reactor.

The general embodiment can be readily adapted to utilize the following additional step following the first step and prior to the second step wherein the first reactor is countercurrently purged at the first pressure with a weakly adsorbing purge fluid and a mixture comprising unreacted feedstock, a portion of the more adsorbable product and a portion of the less adsorbable product is withdrawn from the first reactor at the first pressure. Optionally, this mixture comprising the unreacted feedstock, the more adsorbable product and the less adsorbable product can be separated to form a stream comprising unreacted feedstock and the unreacted feedstock can be recycled for use as feedstock in the first step of the process.

Applicants' process can be readily adapted to perform a variety of additional steps in order to further separate the process streams by conventional methods such as distillation to yield higher purity products or a source process fluids which may be recycled. For example, the stream of the first step which is enriched in the less adsorbable product and depleted in the more adsorbable product as well as unreacted feedstock can be separated to form a stream comprising the less adsorbable product. The stream of the third step comprising unreacted feedstock, a portion of the more adsorbable product and a portion of the less adsorbable product can also be separated to form a stream comprising the more adsorbable product. Finally, the mixture of the fourth step comprising the weakly adsorbable purge fluid, a portion of the more adsorbable product and a portion of the less adsorbable product can be separated to form a stream comprising the weakly adsorbable purge fluid and recycling a portion of the stream for use as the weakly adsorbing purge fluid in the third step.

The present process can be utilized in any endothermic or exothermic equilibrium controlled process including homogeneous reactions involving solely gaseous reactants, and heterogeneous, catalytic reactions involving gaseous reactants. Moreover, the present process can be readily adapted for use in equilibrium controlled reactions which are capable of operation in the absence of a catalyst. The general embodiment is followed with the exception that the reactors contain only adsorbent for the more adsorbable product.

While Applicants' invention is suitable for operating any equilibrium controlled process, Applicants have identified reactions which are particularly suited for operation using their claimed process. Preferred reactions include the reverse water gas shift reaction for producing carbon monoxide, the steam-methane reforming reaction for producing hydrogen, and methane reforming with carbon dioxide to produce carbon monoxide and hydrogen.

The general embodiment of this invention can be used to operate each of these reactions by simply substituting the proper feedstock, adsorbent, catalyst, the relative proportion of catalyst and adsorbent residing in the reactor, the reaction conditions and purge fluids to provide the desired products. For example, the reverse water gas shift reaction for producing carbon monoxide contemplates reacting a feedstock of carbon dioxide and hydrogen to produce carbon monoxide and water. The more adsorbable product with respect to the adsorbent is water such that the less adsorbable product, carbon monoxide, can be collected at feedstock pressure.

Suitable adsorbents for conducting the reverse water gas shift reaction to the present invention include zeolites such as X, A, Y and the mordenites, silica gel, and aluminas such as Alcan AA300 and AA230 which are commercially available from Alcan Corporation, Cleveland, Ohio. Suitable catalysts include conventional water gas shift catalysts such as the iron-chromium high temperature shift catalyst from ICI Corporation, Oakbrook Terrace, Illinois, K6-10 and K6-11 catalysts available from BASF Corporation, Geismer, Louisiana, and low and medium temperature shift catalysts such as R3-11 and K3-110 catalysts which are also commercially available from BASF Corporation, Geismer, Louisiana. Reaction conditions include a temperature ranging from 200° to 600°C, the first pressure which ranges from 2 to 50 bar and the second pressure which ranges from 0.05 bar to 2 bar. The weakly adsorbing purge fluid is selected from the group consisting of methane, hydrogen, nitrogen and carbon dioxide.

The feedstock for the steam-methane reforming reaction comprises water and methane with a ratio of water to methane ranging from 1.5 to 30 when the more adsorbable product is primarily carbon dioxide and from 1 to 1.5 when the more adsorbable product is primarily carbon monoxide. The less adsorbable product is hydrogen in both cases. Reaction conditions include a temperature ranging from 200° to 600°C, the first pressure which ranges from 2 to 50 bar and the second pressure which ranges from 0.05 bar to 2 bar. The weakly adsorbing purge fluid is selected from the group consisting of methane, steam, hydrogen and nitrogen.

Suitable catalysts for conducting the steam-methane reforming reaction include conventional steam-methane reforming and prereforming catalysts such as nickel-alumina, nickel-magnesium alumina and the noble metal catalysts. The adsorbent can be selected to adsorb carbon monoxide, carbon dioxide or a mixture of carbon monoxide and carbon dioxide. For example, adsorbents for carbon dioxide include the metal oxides and mixed metal oxides of magnesium, manganese, lanthanum and calcium and the clays minerals such as sepiolite and dolomite. Adsorbents which are selective toward carbon monoxide include $Cu^{+1}$ on silica-alumina and $Ag^{+1}$ on silica-alumina as described in U.S. Patents 4,019,879 and 4,019,880.

As shall become more apparent upon reading the Detailed Description of the Invention, Applicants' process overcomes problems associated with prior art processes by utilizing a novel series of reaction, adsorption and desorption steps to collect the less adsorbable product in substantially pure form under a relatively constant flow rate at feedstock pressure.

## BRIEF DESCRIPTION OF THE DRAWINGS

FIG. 1 is a process flow diagram of a general embodiment of the present process for operating equilibrium controlled reactions which utilizes two reactors containing an admixture of catalyst and adsorbent, wherein the reactors are operated in a cycle of predetermined sequence.

FIG. 2 illustrates the CO concentration profile in reactor effluent versus time for the reverse water gas shift reaction carried out according to the present process at 4.94 bar (57 psig) and 275°C. Canon monoxide was used as the purge fluid and the pressurizing fluid.

FIG. 3 illustrates the reactor effluent flow rate versus time for the reverse water gas shift reaction carried out according to the present process at 4.94 bar (57 psig) and 275°C. Carbon monoxide was used as the purge fluid and the pressurizing fluid.

FIG. 4 illustrates the CO concentration profile and the flow rate of the reactor effluent for the reverse water gas shift reaction carried out according to the present process at 4.86 bar (55 psig) and 250°C. Carbon monoxide was used as the weakly adsorbing purge fluid and the pressurizing fluid.

FIG. 5 illustrates the CO concentration profile and the flow rate of the reactor effluent for the reverse water gas shift reaction carried out according to the present process at 4.46 bar (50 psig) and 250°C. Carbon dioxide was used as the purge fluid and the pressurizing fluid.

FIG. 6 illustrates the CO concentration profile and the flow rate of the reactor effluent for the reverse water gas shift reaction carried out at 4.46 bar (50 psig) and 250°C. Hydrogen was used as the purge fluid and the pressurizing fluid.

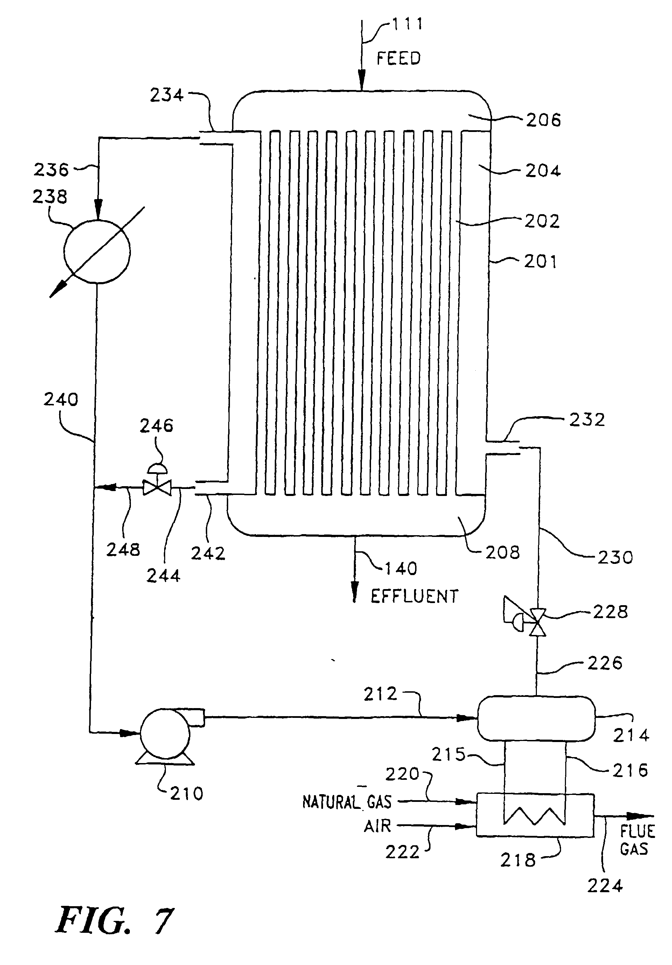

FIG. 7 illustrates one of a plurality of reactors suitable for practicing the claimed process for operating an equilibrium controlled reaction which comprises a shell-and-tube configuration wherein an admixture of an adsorbent for preferentially adsorbing one reaction product over the other reaction products and a catalyst for performing the desired equilibrium controlled reaction are situated in the reactor tubes. The heating and cooling requirements in the moving reaction mass transfer zone of each reactor are provided by indirect heat exchange with a fluid capable of phase change at temperatures maintained in each reactor during sorpreaction, depressurization, purging and pressurization steps during each process cycle.

FIG. 8 presents a graph of $CO_2/H_2O$ isotherms for potassium carbonate modified double layered hydroxide, a preferred adsorbent for use in the claimed process for operating an equilibrium controlled reaction wherein the feedstock comprises water and methane, the more adsorbable product with respect to the adsorbent is carbon dioxide and the less adsorbable product is hydrogen.

## DETAILED DESCRIPTION OF THE INVENTION

Applicants' will now discuss in greater detail their process for operating equilibrium controlled reactions which provides numerous benefits over prior art processes. Specifically, greater conversion of feedstock to products per unit volume of reactor is achieved; a more concentrated reaction product is obtained than could be achieved using a conventional process wherein the reaction stage is segregated from the product adsorption stage; and the process can be operated at less stringent conditions because very favorable equilibrium may not be required.

The present process also provides another additional benefit in that the less adsorbable product with respect to the adsorbent residing in admixture with the catalyst within each reactor may be collected at a relatively constant flow rate at feedstock pressure. This result is accomplished in part by countercurrently purging the reactor with the less adsorbable product until breakthrough of the less adsorbable product occurs at the feed end of each reactor. The extent to which purge is required is dictated by the extent of purity required in the less adsorbable product to be collected during the reaction step. Moreover, the reactor is countercurrently repressurized to the initial process pressure with the less adsorbable product prior to commencing the next process cycle within ear reactor.

While removing the more adsorbable product from the reactor immediately as it is formed in the reaction zone does not change the equilibrium constant for the particular equilibrium controlled reaction, substantially increased conversion of feedstock to products is achieved by practicing the combined steps of the process. In order to effect this objective, two key requirements must be met: First, the adsorbent must be active at the reaction conditions meaning that the adsorbent must retain its capacity and selectivity for the more adsorbable product. Second, the adsorbent must be chemically neutral and must not act as a catalyst for undesirable side reactions.

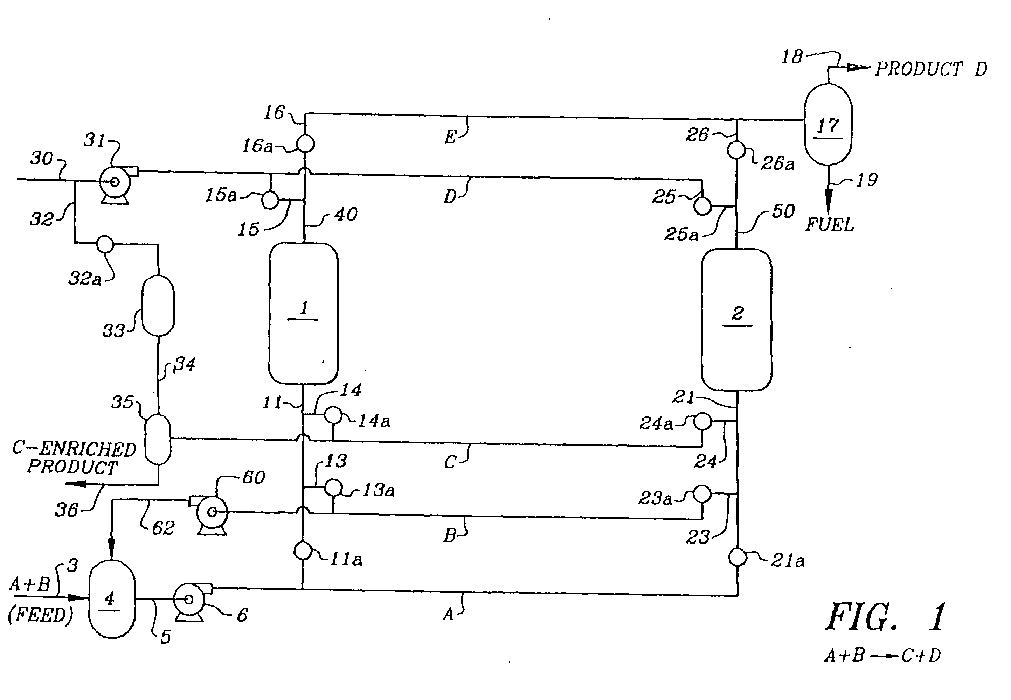

The general embodiment of Applicant's process for operating equilibrium controlled reactions is described in FIG. 1 which utilizes two reactors each containing an admixture of catalyst and adsorbent chosen for the desired equilibrium controlled reaction. Such reactors are described in greater detail in the Specification and FIG. 7. The schematic according to FIG. 1 consists of reactors 1 and 2; numerous control valves; manifolds A through E; pumps 6, 31 and 60; separators 17 and 35; and storage tanks 4 and 33. Feedstock comprising the reactants to be subjected to the desired equilibrium controlled reaction is drawn from storage tank 4 having inlet line 3 and outlet line 5 via pump 6 wherein the pressurized feedstock is introduced into manifold A.

Manifold A is in flow communication with branch inlet lines 11 and 21 which are connected to the inlet ends of reactors 1 and 2. Lines 11 and 21 are equipped with valves 11a and 21a, respectively. Opening of the appropriate valve permits the pressurized feedstock to flow through manifold A into the selected reactor being initially placed on stream. Thus, by opening valve 11a, while valve 21a is closed, feedstock may be caused to flow from manifold A, through line 11 and into reactor 1.

Reactors 1 and 2 are fitted at their respective outlet ends with lines 40 and 50 respectively, each equipped with control valves 16a and 26a, respectively. Lines 40 and 50 are operatively connected to manifold E via lines 16 and 26 through which a stream containing a mixture of components withdrawn from reactors 1 and 2 can be collected in separator 17. The mixture can be separated such that a stream containing the less adsorbable product, referred to as Product D, can be collected via line 18 and residuals may be collected via line 19 for fuel value or recycle. Thus, by opening the appropriate valve 16a or 26a, a mixture containing the less adsorbable product, product D, is caused to flow from the corresponding reactor through lines 40 and 16 or lines 50 and 26 into manifold E for passage into separator 17.

Reactors 1 and 2 are operatively connected to lines 11 and 21, each of which is in flow communication with lines 13 and 23. Lines 13 and 23 are provided with control valves 13a and 23a, respectively, such lines being in flow communication with manifold B. Manifold B can be placed in flow communication with reactor 1 or 2 via lines 13 and 23 upon opening valve 13a or 23a, respectively. Manifold B is also in flow communication with pump 60 which is connected to line 62 which can be used to recycle feedstock to storage tank 4.

Manifold C is in flow communication with reactors 1 and 2 via lines 14 and 24, each line which is equipped with valves 14a and 24a, respectively. Reactor effluent from reactors 1 and 2 may be passed through lines 14 and 24 into manifold C for separation in separator 35 into a stream which is enriched in the more adsorbable product, referred to as Product C, and a stream comprising weakly adsorbing purge fluid which can be passed into storage tank 33 via line 34 for later use.

Manifold D is connected to pump 31 which receives various process fluids via lines 30 and 32. Such process fluids pass through line 30 or line 32 and are pressurized via pump 31. The pressurized fluids may be passed through manifold D which is in flow communication with reactors 1 and 2 via lines 15 and 25, respectively. Lines 15 and 25 are each fitted with valves 15a and 25a such that the flow of streams from Manifold D into reactors 1 and 2 can be controlled. Moreover, weakly adsorbing purge fluid from tank 33 can be transferred to pump 31 via lines 32 and 30 by opening valve 32a.

Operation of the embodiment represented in FIG. 1 will now be explained in connection with an arbitrarily chosen cycle having eight timed periods of ten minutes per period as set forth in Table 1. Although not limited thereto, the process as illustrated in FIG. 1 utilizes two reactors which are operated in cycle according to a predetermined timed sequence. Other arrangements using fewer or a greater number of reactors and the associated gas manifolds and switch valves may be employed, optionally using interrupted or discontinuous operation (using idling) of pumps. Other arrangements using more than two reactors may be employed by appropriate sequencing of the individual steps or periods of the process cycle.

TABLE 1

Mode 1:

| STEPS | TIME Minutes | 11a | 13a | 14a | 15a | 16a | 32a | 21a | 23a | 24a | 25a | 26a | 32a | STEPS Reactor-Sorber II |
|---|---|---|---|---|---|---|---|---|---|---|---|---|---|---|
| Sorpreaction | 0 to 10 | O | C | C | C | O | C | C | O | C | C | C | C | Depressurize |
| Sorpreaction | 10 to 20 | O | C | C | C | O | C | C | C | O | O | C | C | Purge I |
| Sorpreaction | 20 to 30 | O | C | C | C | O | C | C | C | O | O | C | C | Purge II |
| Sorpreaction | 30 to 40 | O | C | C | C | O | C | C | C | C | O | C | C | Pressurize |
| Depressurize | 40 to 50 | C | O | C | C | C | C | O | C | C | C | O | C | Sorpreaction |
| Purge I | 50 to 60 | C | C | O | O | C | C | O | C | C | C | O | C | Sorpreaction |
| Purge II | 60 to 70 | C | C | O | O | C | C | O | C | C | C | O | C | Sorpreaction |
| Pressurize | 70 to 80 | C | C | C | O | C | C | O | C | C | C | O | C | Sorpreaction |

According to the general embodiment of FIG. 1, each of the reactors 1 and 2 undergo four periods of the reaction/adsorption step, referred to as the sorpreaction step, one period of the depressurization step, one period of the Purge I step, one period of the Purge II step, and one period of the pressurization step. As illustrated in Table 1, the steps undertaken at startup in each of reactors 1 and 2 are staggered to enable at least one of the two reactors to undergo the sorpreaction step at all times during the process cycle. The operation of the invention described in FIG. 1 involves principally the following sequence of steps:

(a) **SORPREACTION**-feedstock at a first predetermined pressure is passed through the reactor containing an admixture of catalyst and adsorbent preferentially selective toward retention of the more adsorbable product, referred to as Product C, wherein an effluent stream enriched in the less adsorbable product, referred to as Product D, is withdrawn from the reactor. Product C is selectively adsorbed by the adsorbent and a reaction mass transfer zone (RMTZ) is formed inside the reactor which moves toward the outlet or discharge end of the reactor as more feedstock is passed through the reactor. The adsorbent at the leading edge of the RMTZ is essentially free of the more adsorbable product while the trailing edge of the RMTZ is equilibrated with the more adsorbable product at the local conditions. The sorpreaction step is continued until the adsorbent in the reactor is essentially saturated with Product C. In other words, the RMTZ has reached the effluent end of the reactor or somewhat short of it. The effluent gas, rich in Product D, is discharged from the reactor.

(b) **DEPRESSURIZATION**-the reactor is countercurrently depressurized to a second predetermined pressure by withdrawing a mixture comprising unreacted feedstock, a portion of the more adsorbable product and a portion of the less adsorbable product. The depressurization step is continued until the reactor reaches the second predetermined pressure.

(c) **PURGE I**- the reactor is countercurrently purged at the second pressure with a weakly adsorbing purge fluid with respect to the adsorbent to desorb Product C from the adsorbent and a mixture comprising unreacted feedstock, a portion of Product C and a portion of Product D is withdrawn from the reactor.

(d) **PURGE II**-the reactor is countercurrently purged at the second pressure with Product D to desorb the weakly adsorbing purge fluid and a mixture comprising the weakly adsorbing purge fluid, a portion of Product C and a portion of Product D is withdrawn from the reactor.

(e) **PRESSURIZATION**-the reactor is countercurrently pressurized from the second pressure to the first pressure with Product D prior to commencing another process cycle within the reactor.

The valve positions during the above-mentioned operating cycle are also set forth in Table 1. The designation "O" indicates that a specified valve is open while a "C" represents that a specified valve is closed. The operative sequence of steps occurring in reactor 1 during a complete process cycle will now be described in exhaustive detail so that operation of a continuous process will be fully understood. The identical sequence of steps according to Table 1 occurs in staggered sequence in reactor 2.

Again, referring to the embodiment disclosed in FIG. 1 and the sequence periods and valve positions designated in Table 1, reactor 1 undergoes four sequence periods of the sorpreaction step. Feedstock comprising reactants A and B, stored in storage tank 4, is introduced into reactor 1 by opening valves 11a and 16a and closing valves 13a, 14a and 15a thereby allowing feedstock to flow through manifold A, line 11 and into reactor 1 which contains an admixture of a desired catalyst and an adsorbent preferentially selective toward the more adsorbable product. Product C.

The sorpreaction is continued until reactor 1 is essentially saturated with adsorbed Product C. Product C is selectively adsorbed onto the adsorbent and a reaction mass transfer zone (RMTZ) is formed within reactor 1 which moves toward the discharge end of reactor 1 as more feedstock is passed. The sorpreaction is completed when the MTZ reaches the effluent end of the reactor or somewhat short of it by a predetermined set point

A mixture which is enriched in the less adsorbable product and depleted in the more adsorbable product as well as unreacted feedstock exits the discharge end of reactor 1 via lines 40 and 16 and flows into manifold E for collection in separator 17. Optionally, the mixture in separator 17 can be separated by conventional techniques such as pressure swing adsorption, thermal swing adsorption or distillation or condensation to form a stream comprising the less adsorbable product, Product D, which is discharged from separator 17 via line 18 and the remainder of the components of the mixture are discharged via line 19.

The process proceeds with one period of the depressurization step wherein reactor 1 is countercurrently depressurized to a second predetermined pressure by withdrawing a mixture comprising unreacted feedstock; a portion of the more adsorbable product and a portion of the less adsorbable product from the inlet end of reactor 1. Valve 13a is opened while valves 11a and 14a remain closed allowing the mixture to be passed through lines 11 and 13 into manifold B and in flow communication with pump 60. The mixture exits the discharge end of pump 60 proceeding via line 62 for use as fuel (not shown) or recycle into storage tank 4 for use as feedstock in a subsequent process cycle. The depressurization step is continued until the reactor reaches the second predetermined pressure.

Reactor 1 is then subjected to one period of the purge I step. Reactor 1 is countercurrently purged at the second pressure with a weakly adsorbing purge fluid with respect to the adsorbent. Upon opening valves 14a and 15a while valves 25a and 32a remain in the dosed position, weakly absorbing purge fluid from an external source passes through pump 31 via line 30 and exits pump 31 at the second pressure to proceed via manifold D, line 15 and line 40 into the exit end of reactor 1. A mixture comprising unreacted feedstock, weakly adsorbing purge fluid, a portion of Product C and a portion of Product D is withdrawn from reactor 1 via line 11, line 14 and manifold C and is collected in separator 35. This mixture may be used as fuel, discharged for use outside the process or separated in separator 35 to form a stream of weakly adsorbing purge gas. A portion of the weakly adsorbing purge fluid may be transferred through line 34 into storage tank 33 for future use. Upon demand via opening valve 32a, weakly adsorbing purge fluid may be drawn to pump 31 via lines 32 and 30 for use in subsequent process cycles.

Reactor 1 is then subjected to one period of the purge II step wherein reactor 1 is countercurrently purged with the less adsorbable product, Product D. Upon opening valves 14a and 15a while valves 25a and 32a remain in the closed position, the less adsorbable product from an external source passes through pump 31 via line 30 and exits pump 31 at the second pressure to proceed via manifold D, line 15 and line 40 into the exit end of reactor 1. A mixture comprising unreacted feedstock, a portion of Product C and a portion of Product D is withdrawn from reactor 1 via line 11, line 14 and manifold C and is collected in separator 35. This mixture may be used as fuel, discharged for use outside the process or separated in separator 35 to form a stream of the weakly adsorbing purge fluid which may be transferred through line 34 into storage tank 33 for future use. Upon demand via opening valve 32a, such weakly adsorbing purge fluid may be drawn to pump 31 via lines 32 and 30 for use in subsequent process cycles.

The final step of the process cycle involves a single sequence of the pressurization step wherein reactor 1 is countercurrently pressurized from the second pressure to the first pressure with Product D prior to commencing another process cycle within the reactor. Specifically, upon opening valve 15a while valves 11a, 13a, 14a, 25a and 32a remain in the dosed position, the less adsorbable product passes through pump 31 via line 30 and exits pump 31 at the second pressure to proceed via manifold D, line 15 and line 40 into the exit end of reactor 1. This step is stopped when reactor 1 reaches the first pressure.

The process proceeds through additional cycles according to the above-mentioned steps enumerated in Table 1. While the sequence periods are depicted as being of equal length, this is neither required or necessary. The times will be set by allowable maximum gas flow rates, valve and line sizes and the properties of the adsorbent used. Alternate routines may be employed for establishing the duration of each of the cycle steps. For example, the end of a particular step may be determined by other techniques known in the art such as by analysis of the composition of the reactor effluent.

FIG. 7 presents a detailed description of reactors 1 and 2 as presented in FIG. 1. The reactor design and operating scheme are particularly suited toward use in practicing the claimed invention. Reactor 201 depicts a conventional stainless steel shell-and-tube reactor. An admixture of the catalyst suitable for catalyzing the desired equilibrium controlled reaction and the adsorbent for preferentially adsorbing the more adsorbable reaction product is loaded into a plurality of tubes 202. A plurality of shell elements 204 formed between adjacent tubes 202 receives a heat transfer fluid capable of phase change which is selected to undergo such phase change at the desired operating temperature of the desired equilibrium controlled reaction being carried out in the tubes 202.

The reactor 201 is preferentially designed to operate net endothermic reactions although the reactor is also well suited to operate net exothermic equilibrium controlled reactions. Net endothermic reactions are defined as those equilibrium controlled reactions in which heat must be added to the reactor to carry out the sorpreaction step because the endothermic heat of reaction of the equilibirum controlled reaction is greater than the energy liberated by the exothermic adsorption of the more adsorbable product.

The feedstock for a particular equilibrium controlled reaction is fed into port 111 of reactor 201 and into a gas distributor 206 at the desired feed rate, pressure and temperature before entering the tubes 202. The feed gas is contacted with the admixture of adsorbent for the more adsorbable product and desired catalyst residing in tubes 202 under reaction conditions sufficient to convert the feedstock to a mixture of a more adsorbable product, a less adsorbable product and unreacted feedstock. The feedstock reacts with the catalyst as the feedstock flows through tubes 202 and the more adsorbable product is adsorbed onto the adsorbent.

The region of the tubes 202 in which simultaneous reaction and adsorption occurs is referred to as the reaction mass transfer zone (RMTZ). The more adsorbable product is removed from the reaction zone by adsorption onto the adsorbent and the less adsorbable product exits tubes 202 into a gas collection zone 208. The less adsorbable product is collected until the RMTZ proceeds to a point wherein the purity of the less adsorbable product diminishes to a preset level at which time the flow of feedstock into reactor 201 is stopped and diverted to an alternate reactor of the plurality of reactors being utilized in the process. The less adsorbable product is withdrawn as an essentially pure product from port 140.

When the overall sorpreaction step is endothermic (endothermic heat of reaction is greater than the exothermic heat of adsorption), the RMTZ moving through the reactor requires heat input to maintain the reactor temperature. The heat transfer fluid (HTF) vapor which is capable of phase change under process operating conditions enters port 232 of reactor 201 and fills shells 204 which are isolated from tubes 202. The pressure within the shells is controlled to the saturation pressure of the HTF at the desired reaction temperature. When the reaction occurring within the tubes 202 is endothermic, the temperature in the RMTZ within the tube begins to decrease as the reaction proceeds. Below the dew point of the HTF vapor, the vapor condenses on the outer wall of the tubes 202 into a liquid at the same temperature and the vapor liberates the heat of condensation. The heat released from condensation of the HTF vapor travels through the tube walls and heats the reactants, catalyst and adsorbent within the RMTZ contained in tubes 202.

As the RMTZ moves along the reaction tubes, HTF vapor continuously condenses outside the tubes at the RMTZ thereby providing heat to maintain the RMTZ at an approximately constant temperature. The HTF vapor condenses only at the location where heat is required (at the RMTZ). The condensed HTF is collected at the bottom of the shell side and is withdrawn periodically or continuously through port 242 and line 244 by opening valve 246 into line 248. The liquid level in the reactor shell side is always maintained below the level of port 232.

A small amount of HTF vapor is continuously withdrawn from port 234 at the top of the reactor and is transported to condenser 238 via line 236. The condensed HTF from the condenser 238 in line 240 is combined with the condensed HTF withdrawn from the reactor via line 248. The combined HTF liquid is pumped through a liquid pump 210 via line 212 into a HTF vaporizer drum 214 which is part of the HTF vaporizer system consisting of the vaporizer drum 214 and the heater or furnace 218. The HTF in drum 214 is continuously fed as liquid into the heater 218 via line 215.

Heater 218 is a conventional radiant heat exchange system in which heat is provided by combusting natural gas via line 220 and air via line 222. The combustion of natural gas produces a flue gas which is discharged from vent 224. The transfer tubes or coils 215 and 216 are contained in the radiant section of the furnace 218. The heat generated in the furnace is used to vaporize a portion of the HTF liquid and the vapor and liquid mixture is recirculated into the HTF vaporizer drum 214 via line 216. The HTF vapor in drum 214 is fed to the reactor shell side via lines 226 and 230 and through port 232. A forward pressure regulator 228 maintains the HTF vapor on the reactor shell side at a fixed pressure. The vapor in the shells 204 is maintained at 50- 35.47 bar (500 psig) and at a temperature typically in excess of 100°C. As the HTF vapor condenses due to heat flux requirements in the tubes 202, the HTF vapor pressure on the reactor shell side decreases, and the pressure regulator 228 opens to release more HTF vapor via line 230 and port 232 into the shells. Thus, the reactor can be maintained at nearly isothermal conditions by circulating the HTF liquid and vapor as previously described.

At the end of the reaction sequence, the feed to the reactor is discontinued by closing the inlet valve at port 111 and the outlet valve at port 140. The valve sequencing described in Table 1 is followed during regeneration of the adsorbent in the reactor. Regeneration of the adsorbent in reaction tubes 202 is done countercurrently to the direction of the feedstock flow in the first step of the process. First the reactor is depressurized by opening port 111 so that the pressure in the reactor is decreased from the first pressure to the second pressure as described in the general embodiment. The HTF vapor provides the heat to compensate for the cooling associated with conducting the depressurization step of the process.

The purging step is conducted next wherein a weakly adsorbing purge fluid is introduced through port 140 into the gas collection zone 208 and the tubes 202 to desorb the more adsorbable product from the adsorbent. The step is endothermic and heat and mass transfer zones are formed which move through tubes 202 in a direction countercurrent to the feedstock flow in the first step of the process. The HTF vapor condenses on the tube surface at the location of the heat or mass transfer zone and provides heat to the reactor in order to maintain the tubes at essentially constant temperature during this desorption step. Once the mass transfer zone has countercurrently exited tubes 202, the flow of the weakly adsorbing fluid from port 140 is stopped.

The product purge steps are then performed wherein the product gas is introduced into the reactor tubes 202 from port 140. The product gas desorbs the weakly adsorbing gas from the adsorbent. As in all steps of the process, heat and mass transfer zones are formed in the reactor tubes 202 which move along the length of the reactor. Condensation of the HTF vapor in the shells 204 provides the energy for desorbing the weakly adsorbing fluid with the product gas. When the product gas mass transfer zone exits the reaction tubes, port 111 is dosed and the pressure in the reactor tubes is allowed to increase to the reaction presssure with the product gas. At this point the regeneration cycle is complete and the reactor is ready for the reaction cycle.

Several fluids capable of phase change under reaction conditions are commericially available and can be selected by one of ordinary skill in the art without undue experimentation. Examples of such fluids include (i) Syltherm 800 from Dow Chemical Company (highly stable polydimethylsiloxane), (ii) Dowtherm A from Dow Chemical Company (a eutectic mixture of biphenyl oxide and diphenyl oxide) and (iii) Therminol VP-1 from Monsanto Company (eutectic mixture of 26.5% biphenyl oxide and 73.5% diphenyl oxide). These HTFs are capable of operating with film temperatures in excess of 425°C. For lower temperature operation, steam may be used as the phase change fluid which is capable of phase change. The maximum temperature for using steam in this application is about 300°C.

Applicants' cyclic process which draws its heating and cooling requirements via indirect heat exchange with a fluid capable of phase change under process operating conditions offers several advantages over prior art because

## EP 0 737 646 B1

(i) the condensing HTF vapor provides heat to the moving RMTZ allowing the SER reactor to operate isothermally, (ii) the zones behind and ahead of the RMTZ do not overheat, eliminating problems associated with tube or catalyst overheating, (iii) the inventory and circulation of heat transfer fluid is significantly reduced compared with conventional heat exchange where no phase change occurs.

Applicants have identified reactions which are particularly suited for operation using their claimed process. Preferred reactions include the reverse water gas shift reaction for producing carbon monoxide, the steam-methane reforming reaction for producing hydrogen, and methane reforming with carbon dioxide to produce carbon monoxide and hydrogen. The general embodiment of this invention can be used to operate each of these reactions by simply substituting the proper feedstock, adsorbent, catalyst, the relative proportion of catalyst and adsorbent residing in the reactor, the reaction conditions and purge fluids to provide the desired products. For example, the reverse water gas shift reaction for producing carbon monoxide contemplates reacting a feedstock of carbon dioxide and hydrogen to produce carbon monoxide and water. The more adsorbable product with respect to the adsorbent is water such that the less adsorbable product, carbon monoxide, can he collected at feedstock pressure.

Suitable adsorbents for conducting the reverse water gas shift reaction to the present invention include zeolites such as X, A, Y and the mordenites, silica gel, and aluminas such as Alcan AA300 and AA230 which are commercially available from Alcan Corporation, Cleveland, Ohio. Suitable catalysts include conventional water gas shift catalysts such as the iron-chromium high temperature shift catalyst from ICI Corporation, Oakbrook Terrace, Illinois, K6-10 and K6-11 catalysts available from BASF Corporation, Geismer, Louisiana, and low and medium temperature shift catalysts such as R3-11 and K3-110 catalysts which are also commercially available from BASF Corporation, Geismer, Louisiana. Reaction conditions include a temperature ranging from 200° to 600°C, the first pressure which ranges from 2 to 50 bar and the second pressure which ranges from 0.05 bar to 2 bar. The weakly adsorbing purge fluid is selected from the group consisting of methane, hydrogen, nitrogen and carbon diode.

The feedstock for the steam-methane reforming reaction comprises water and methane in a stoichiometric ratio of water to methane ranging from 1.5 to 30 when the more adsorbable product is primarily carbon dioxide and from 1 to 1.5 when the more adsorbable product is primarily carbon monoxide. The less adsorbable product is hydrogen in both cases. Reaction conditions include a temperature ranging from 200° to 600°C, the first pressure which ranges from 2 to 50 bar and the second pressure which ranges from 0.05 bar to 2 bar. The weakly adsorbing purge fluid is selected from the group consisting of methane, steam, hydrogen and nitrogen.

Suitable catalysts for conducting the steam-methane reforming reaction include conventional steam-methane reforming and prereforming catalysts such as nickel-alumina, nickel-magnesium alumina and the noble metal catalysts. The adsorbent can be selected to adsorb carbon monoxide, carbon dioxide or a mixture of carbon monoxide and carbon dioxide. For example, preferential adsorbents for carbon dioxide include the metal oxides and mixed metal oxides of magnesium, manganese, lanthanum and calcium and the days minerals such as sepiolite and dolomite. Adsorbents which are selective toward carbon monoxide include $Cu^{+1}$ on silica-alumina and $Ag^{+1}$ on silica-alumina as described in U.S. Patents 4,019,879 and 4,019,880.

Applicants have discovered two new classes of materials described herein as modified double layered hydroxides and non-modified and modified spinels which are capable of selectively adsorbing $CO_2$ from $CO_2$-containing streams containing moisture levels above stoichiometric with respect to $CO_2$ and as high as 10 atmospheres of water vapor and which possess utility at temperatures ranging from 200°C to 500°C, and possible higher temperatures. The literature is not believed to teach adsorbents of the following types which are capable of selectively adsorbing $CO_2$ in the presence of large amounts of water under operating temperatures ranging from 200°C to 500°C and which are capable of being regenerated by purging with inert gas at such elevated temperatures.

The modified double layered hydroxides which possess utility as $CO_2$ adsorbents under the above-referenced conditions are represented by the general formula:

$$[M^{II}_{(1-x)}M^{III}_x(OH)_2][C^{n-}]_{x/2} \bullet y\,H_2O \bullet zM^{I}_{2(1-r)}M^{II'}_rA,$$

wherein

$M^I$ = $Li^+$, $Na^+$, $K^+$, $Cr^+$ or $Rb^+$, and mixtures thereof;
$M^{II}$ = $Mg^{2+}$, $Ca^{2+}$, $Mn^{2+}$, $Fe^{2+}$, $Co^{2+}$, $Ni^{2+}$ or $Zn^{2+}$, and mixtures thereof;
$M^{II'}$ = $Mg^{2+}$, $Ca^{2+}$, $Sr^{2+}$, $Ba^{2+}$, $Zn^{2+}$
$M^{III}$ = $Al^{3+}$, $Cr^{3+}$, $Mn^{3+}$, $Co^{3+}$, $Ni^{3+}$ or $La^{3+}$, and mixtures thereof;
$C^{n-}$ = $NO_3^-$, $SO_4^{2-}$, $CO_3^{2-}$, $CH_3CO_2^-$, $Cl^-$, $Br^-$, $F^-$ or $I^-$ and
$A$ = $O^{2-}$ or $CO_3^{2-}$; wherein

n = 1, 2

12

x = 0.01 to 0.99;
y = 0 to 4;
z = -0.01 to 7; and
r = 0 to 1.

Preferred modified double layered hydroxides are represented by the formula:

$$[Mg_{(1-x)} Al_x (OH)_2][CO_3]_{x/2} \bullet y\, H_2O \bullet z\, M^I_2 CO_3$$

wherein

$$0.09 \le x \le 0.40$$

$$0 \le y \le 3,5,\ 0 \le z \le 3,5$$

and

$$M^I = \text{Na or K.}$$

The modified and non-modified spinels which possess utility as $CO_2$ adsorbents under the above-referenced conditions are represented by the generic formula:

$$D^{Td}_{(1-P)}\, E^{Td}_{P}\, D^{oh}_{P}\, E^{oh}_{(2-P)}\, O_4 \bullet y\, M^I_{2(1-X)}\, M^{II}_x A$$

in which

"Td" indicates cation occupation of tetrahedral lattice site and "oh" indicates cation occupation of octahedral lattice site,
$D^{Td}$ and $D^{oh}$ are metal cations or a combination of metal cations chosen from groups I-A, II-A, III-A, IV-A, V-A, I-B, II-B, IV-B, V-B, VI-B, VII-B and VIII of the periodic table of the elements;
$E^{Td}$ and $E^{oh}$ are individually selected metal cations selected from groups I-A, III-A, IV-A, V-A, I-B, II-B, IV-B, V-B, VI-B, VII-B, VIII of the periodic table of the elements;
such that the value of the octahedral to tetrahedral bond length ratio, R, of the metal cations $D^{Td}$, $E^{Td}$, $D^{oh}$ and $E^{oh}$ falls within the range of $1.155 > R > 0.886$, wherein
$M^I = Li^+, Na^+, K^+, Cs^+, Rb^+$
$M^{II} = Mg^{+2}, Ca^{+2}, Sr^{+2}, Zn^{+2}, Ba^{+2}$
$X = O$ to $I^-$; $A = O^{2-}$, $CO_3^{2-}$ and $Y = 0$ to $7$.

Preferred spinels which are suitable for use as $CO_2$ adsorbent under high temperatures in the presence of large amounts of water are represented by the formula $Mg\,[Al_2]O_4 \cdot y\, K_2CO_3$ wherein $0 \le y \le 3.5$.
Methane can be reformed with carbon dioxide to produce carbon monoxide and hydrogen. Thus, the feedstock comprises carbon dioxide and methane, the catalyst comprises a methane reforming or prereforming catalyst such as nickel-alumina, nickel-magnesium alumina and the noble metal catalysts such as rhodium, ruthenium and iridium. Suitable adsorbents for hydrogen include the hydrogen-metal alloys such as palladium, palladium-silver, magnesium-nickel, iron-titanium and lanthanum-nickel, and the like. Suitable adsorbents for carbon monoxide include $Cu^+$ and $Ag^+$ salts. The more adsorbable product with respect to the adsorbent may be hydrogen and the less adsorbable product may be carbon monoxide. Alternatively, the more adsorbable product may be carbon monoxide and the less adsorbable product may be hydrogen. Reaction conditions comprise a temperature ranging from $200°$ to $600°C$, the first pressure which ranges from 2 to 50 bar and the second pressure which ranges from 0.05 to 2 bar. The weakly adsorbing purge fluid is selected from the group consisting of steam, methane, carbon dioxide, carbon monoxide, nitrogen, and hydrogen.
While removing the more adsorbable product from the reactor immediately as it is formed does not change the equilibrium constant for the particular equilibrium controlled reaction, substantially increased reactor throughput is achieved by practicing the combined steps of the process. In order to effect this objective, two key requirements must be met: First, the adsorbent must be active at the reaction conditions meaning that such the adsorbent must retain its capacity and selectivity for the more adsorbable product. Second, the adsorbent must be chemically neutral and must not act as a catalyst for the desired equilibrium controlled reaction.

The ratio by weight of catalyst and adsorbent can be widely varied depending upon the particular requirements of a particular catalyzed equilibrium controlled reaction to be operated under the present invention. As stated earlier in the Specification, the general and alternate embodiments of the present invention are suitable for operating equilibrium controlled reactions which are capable of being operated in the absence of a catalyst. No special techniques are required to prepare the admixture of catalyst and adsorbent to be placed in each reactor. The catalyst and adsorbent are simply mixed together by conventional means in order to disperse the catalyst and adsorbent. The catalyst and adsorbent to be mixed should desirably possess compatible average particle sizes such that the catalyst and adsorbent do not segregate into domains during operation of the process.

The term, weakly adsorbing fluid, refers to a fluid which is capable of displacing the product which is adsorbed by the adsorbent during operation of the process and which can then be desorbed by the less adsorbing product such that subsequent process cycles can be conducted in each reactor. One of ordinary skill in the art can readily select one or a mixture of weakly adsorbing fluids suitable for use in the claimed invention.

The general and alternate embodiments of the present invention can be operated using conventional hardware. For example, suitable reactors include any vessel which is capable of being subjected to the reaction conditions required to practice a particular equilibrium controlled process such as shell and tube reactors. Moreover, the separators enumerated in the process are readily selected by one of ordinary skill in the art based upon considerations such as the particular mixtures to be separated, the volume of fluids to be separated and the like.

The following examples are provided to further illustrate Applicants' process for operating equilibrium controlled reactions. The examples are illustrative and are not intended to limit the scope of the appended claims.

## EXAMPLE 1

## REVERSE WATER-GAS SHIFT REACTION FOR PRODUCING CARBON MONOXIDE

The reverse water-gas shift reaction for manufacturing carbon monoxide was theoretically evaluated in order to test Applicants' process for controlling equilibrium controlled reactions. The process is represented by the reaction

$$CO_2 + H_2 \leftrightarrow CO + H_2O$$

and is especially of interest because the reaction is typically performed at a high temperature (>800°C) because it results in low equilibrium conversions at lower temperatures (especially at <500°C). The process is further complicated by side reactions at high temperatures which result in the formation of carbon which deactivates the catalyst. Calculations performed using temperature versus thermodynamic equilibrium constant data found in the literature indicate that if an adsorbent such as NaX zeolite could be used to remove 99.9% of the water formed in the reaction zone, conversions of greater than 80% would be possible at about 300°C.

Applicants experimentally tested the general embodiment of their invention using the reverse water gas shift reaction as a representative equilibrium controlled reaction. The process was operated under the following conditions: Reaction Temperature = 275°C; Reaction Pressure = 4.84 bar (57 psig); $H_2$ flow rate = 100 cc/min, $CO_2$ flow rate = 100 cc/min; 1:1 (by weight) physically admixed low temperature shift catalyst and NaX zeolite adsorbent pellets; Gas in reactor prior to admission of reactants = CO at 57 psig and 275°C; Total moles CO in reactor system prior to introduction of reactants = 0.17 gram mole.

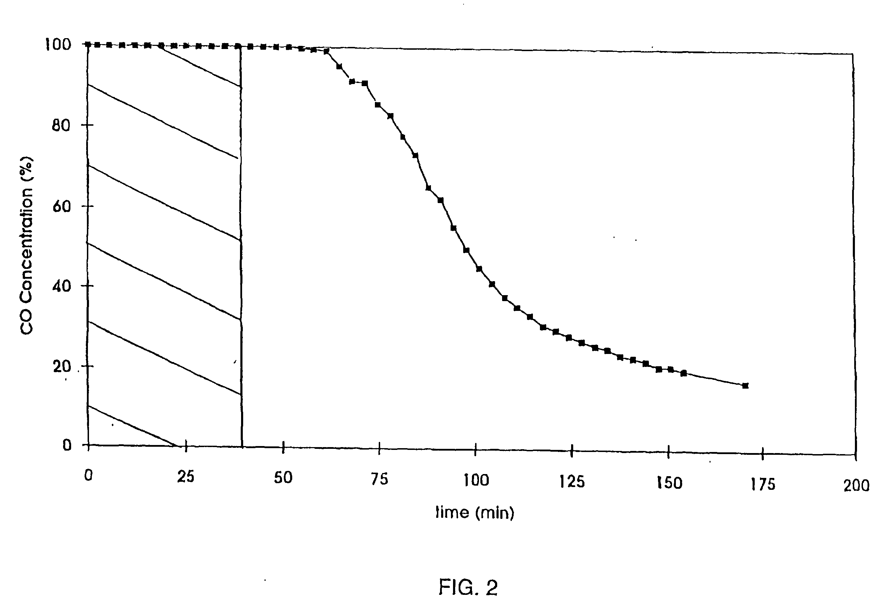

In the first step of the process, the feedstock was introduced into the reactor which was pre-saturated with one of the product gases, carbon monoxide, at 275°C and 4.84 bar (57 psig). The process was carried out under the above-mentioned conditions. For the first 70 minutes, the effluent stream consisted of CO only. FIG. 2 illustrates the CO concentration profile in reactor effluent versus time for the reverse water gas shift reaction. The hatched area of the diagram represents the carbon monoxide effluent from the reactor which is equivalent to the quantity of carbon monoxide present in the reactor at the start of the process. This amount of carbon monoxide left the reactor in the first 38 minutes of the operation. Furthermore, the diagram illustrates that essentially pure carbon monoxide was produced from the reactor during the time span between about 38 minutes and 78 minutes. This essentially pure carbon monoxide effluent, which requires minimal cleanup to remove the small amount of impurities in the effluent, was the net essentially pure can monoxide produced by the concept of the present invention. This product CO is produced at the feedstock pressure of 57 psig.

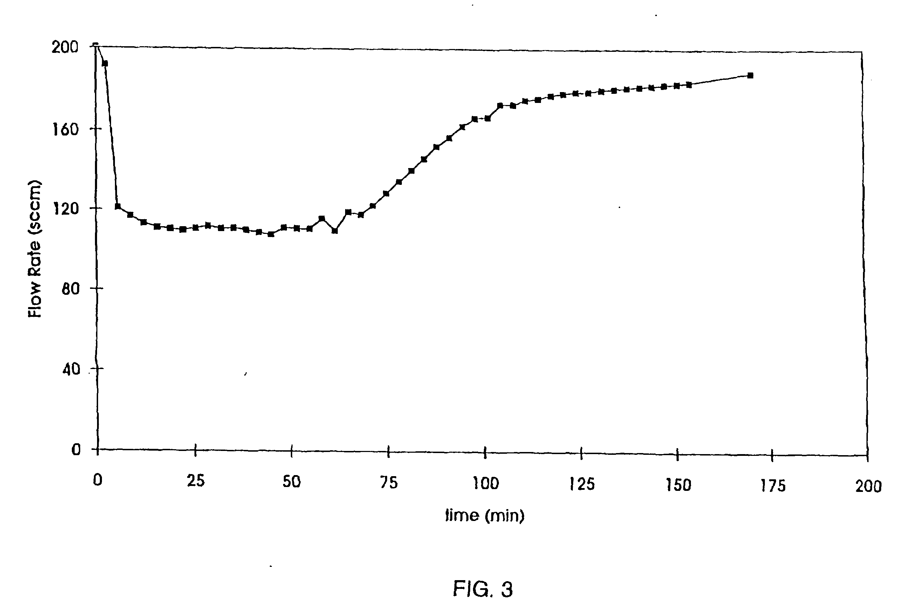

FIG. 3 illustrates the reactor effluent flow rate versus time for the reverse water gas shift reaction of Example 1. The effluent flow rate was relatively constant during the period of 38 to 78 minutes when the carbon monoxide product is produced. The initial step may be carried on for varying amounts of time: the reaction step is preferably stopped after 71.7 minutes to provide a product stream containing 98% carbon monoxide or 78.3 minutes to obtain a product stream containing 97% carbon monoxide. In the second step the reactor was countercurrently depressurized to 10 psig to release a mixture of CO, $CO_2$, $H_2$ and $H_2O$. In the third step the bed was countercurrently purged with a weakly adsorbing purge fluid, methane, at 275°C, at a pressure of 10 psig and a flow rate of 1600 cc/min. in order to desorb the remaining water from the adsorbent-catalyst admixture. In the fourth step of the process, the reactor was countercurrently purged with carbon monoxide to desorb the weakly adsorbing purge fluid and other fluids remaining in the reactor. Finally, in the fifth step, the reactor was countercurrently pressurized to 57 psig with carbon monoxide.

The usable conversion of carbon dioxide to carbon monoxide was 60.6% for reactor effluent containing 97% carbon monoxide and 56.0% for reactor effluent containing 98% purity.


**EXAMPLE 2 (COMPARATIVE)**


**EQUILIBRIUM CONVERSION ESTIMATIONS FOR CONVENTIONAL REVERSE WATER-GAS SHIFT REACTION FOR PRODUCING CARBON MONOXIDE**


Equilibrium conversion was estimated based on thermodynamic data for a conventional reverse water gas shift reaction at different reaction temperatures. The calculations show that at the reaction temperature of 275°C according to Example 1, the equilibrium conversion in the absence of the adsorbent is only 11.0%. In order to achieve conversion of 60.6% according to Example 1, the reaction would need to be carried out at 1150°C. This points to the significant reduction in reaction temperature achieved in practicing the process of the present invention.

An additional major advantage of the present invention is that CO is obtained as an essentially pure product as in Example 1. In conventional reverse water gas shift reactions, operated at a temperature of 275°C, the product composition would be: 5.5% CO, 5.5% $H_2O$, 44.5% $H_2$ and 44.5% $CO_2$. For reactions at 1000° and 1150°C, the compositions are (i)28% CO, 28% $H_2O$, 22% $H_2$ and 22% $CO_2$ and (ii) 30.3% CO, 30.3% $H_2O$, 19.7% $H_2$ and 19.7% $CO_2$, respectively. Thus, the gas mixture would need to be separated by PSA/VSA technology, for example, to obtain a pure CO product.

Yet another major advantage of the present invention is that CO is obtained at feedstock pressure (eg. 4.84 bar (57 psig) in Example 1). With conventional PSA/VSA technology, the CO would be recovered at close to atmosphere pressure and would have to be recompressed for use.


**EXAMPLE 3**


**EFFECT OF PRESSURIZATION GAS TYPE ON PROCESS PERFORMANCE FOR REVERSE WATER-GAS SHIFT REACTION FOR PRODUCING CARBON MONOXIDE**


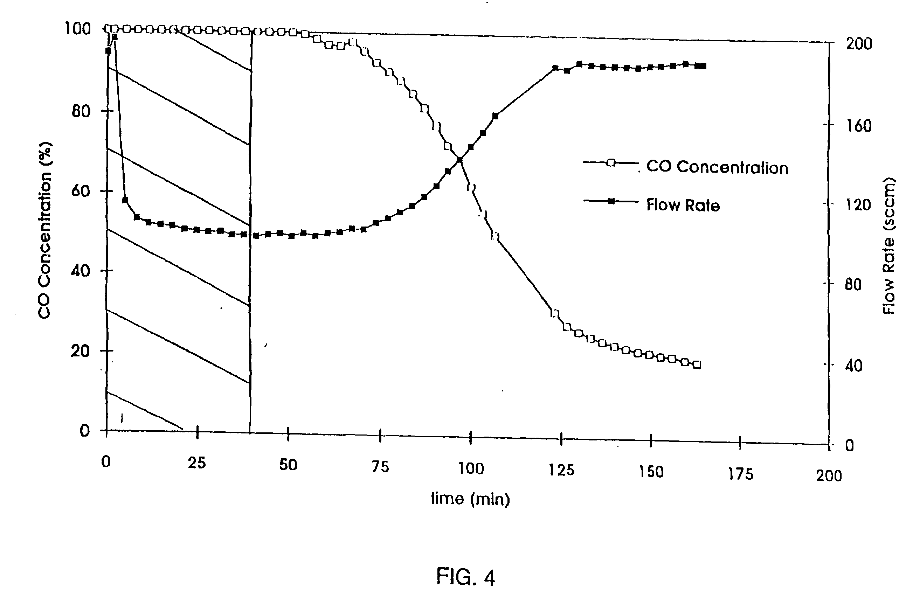

This example demonstrates the effect of varying the type of fluid used in the fourth and fifth steps of Applicants' process described in Example 1 on reactor operation, conversion of $CO_2$ to CO and product purity. The experiments were carried out at the following conditions: Reaction Temperature = 250°C; Reaction Pressure = 4.46 bar (50 psig); $H_2$ flow rate = 100 cc/min; $CO_2$ flow rate = 100 cc/min; Catalyst and zeolite pellets employed in Example 1 were physically admixed (1:1 ratio by weight); Gas in reactor prior to admission of reactants = CO or $CO_2$ or $H_2$ at 4.46 bar (50 psig). FIGS. 4, 5 and 6 illustrate the different results obtained when carbon monoxide, carbon dioxide, or hydrogen were used as the purge and pressurization fluids, respectively.

FIG. 4 illustrates the CO concentration profile and the flow rate of the reactor effluent for the reverse water gas shift reaction when the process is carried out using carbon monoxide as the purge fluid and pressurizing fluid according to the fourth and fifth steps of the process according to Example 1. Again, the hatched area of the diagram represents the carbon monoxide effluent from the reactor which is equivalent to the quantity of carbon monoxide present in the reactor at the start of the process. This amount of carbon monoxide left the reactor in just 38 minutes of the operation. FIG. 4 demonstrates that the claimed process provides a reactor effluent which comprises essentially pure carbon monoxide and that the carbon monoxide can be conveniently collected at a constant flowrate.

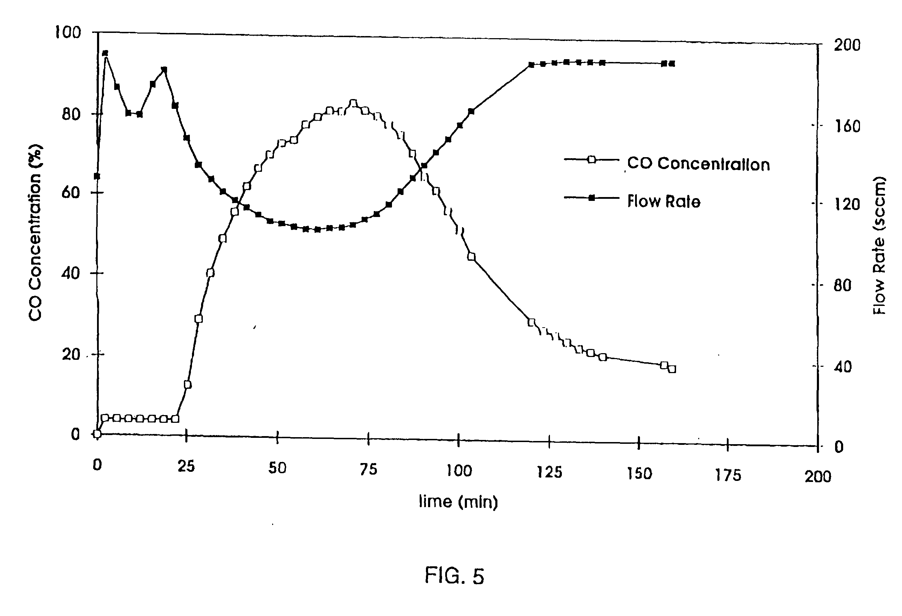

FIG. 5 illustrates the CO concentration profile and the flow rate of the reactor effluent for the reverse water gas shift reaction when the process is carried out using carbon dioxide as the purge fluid and pressurizing fluid according to the fourth and fifth steps of the process according to Example 1. In contrast to the results depicted in FIG. 4 when carbon monoxide was used as the purge fluid, FIG. 5 shows that the carbon monoxide concentration slowly rises, reaches a maximum and then decreases with practically no section of constant CO composition and flowrate when carbon dioxide was used as the purge fluid in the fourth and fifth steps of the process according to Example 1. Furthermore FIG. 5 shows that the CO composition of reactor effluent never exceeds 83% as opposed to essentially pure CO effluent obtained in FIG. 4 wherein carbon monoxide was used as the purge and pressurization fluid.

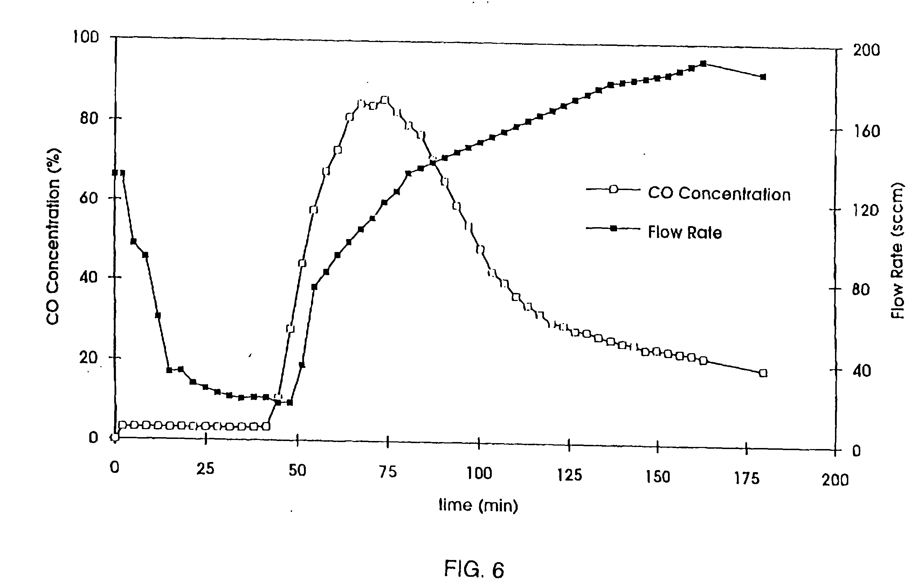

FIG. 6 illustrates the CO concentration profile and the flow rate of the reactor effluent for the reverse water gas shift reaction when the process is carried out using hydrogen as the purge fluid and pressurizing fluid according to the fourth and fifth steps of the process according to Example 1. In contrast to the results depicted in FIG. 4 when carbon monoxide was used as the purge fluid, FIG. 6 shows that the carbon monoxide concentration slowly rises, reaches a maximum and decreases with practically no section of constant CO component and flowrate when hydrogen was used as the purge fluid in the fourth and fifth steps of the process according to Example 1. Further, FIG. 6 shows that the CO composition of the effluent gas never exceeds 85% as opposed to essentially pure CO effluent of FIG. 4.

Several observations can be made upon reviewing the results depicted in FIGS. 4, 5 and 6. Pure CO in the product stream is surprisingly observed only in the case where carbon monoxide is used as the purge and pressure fluid of steps 4 and 5 of the general embodiment. This result does not occur when carbon dioxide or hydrogen is used as the purge and pressurization fluid. As evidenced in FIGS. 5 and 6, a maximum carbon monoxide concentration of only about 80-85% is achieved when $H_2$ or $CO_2$ are employed as the purge fluid in the fourth and fifth steps of the process according to Example 1. Thus, if a high purity CO product is desired without further separation, the reactor must be pre-saturated with the less adsorbable product, carbon monoxide.

## EXAMPLE 4

### PREPARATION AND CHARACTERIZATION OF A POTASSIUM CARBONATE MODIFIED DOUBLE LAYERED HYDROXIDE

Three samples of a potassium carbonate modified double layered hydroxide were prepared respectively by impregnation of 0.5 $\underline{M}$, 2.0 $\underline{M}$ and 5.0 $\underline{M}$ aqueous solutions of $K_2CO_3$ into individual 3g samples of HTC hydrotalcite powder (HTC) supplied by La Roche Company, Baton Rouge, Louisiana. The HTC was activated at 400°C for 4 hours prior to impregnation. The carbonate solution was added to test tubes containing the hydrotalcite to the point of incipient wetness. After 1 hour, the excess liquid was decanted and the resulting paste was placed into an oven and dried at 120°C for 16 hours. Samples of the modified HTC were activated by heating at 400-500°C for 2 hours prior to measuring their $CO_2$ capacities. Samples prepared from the 0.5 $\underline{M}$, 2.0 $\underline{M}$ and 5.0 $\underline{M}$ solutions were characterized by elemental analysis to contain 21.7, 57.3 and 77.0 weight percent $K_2CO_3$, respectively with Mg to Al ratios of approximately 2.1. These materials were analyzed by thermo gravimetric analysis (TGA) to possess capacities of 0.67, 0.35 and 0.15 mmol $CO_2$/g, respectively, at 400°C under dry $CO_2$/$N_2$ cycling conditions ($P_{CO_2}$ = 0.667 bar (500 Torr)). At 500°C the same materials had capacities of 0.82 0.43 and 0.18 mmol $CO_2$/g, respectively, under similar testing conditions.

## EXAMPLE 5

### EFFECT OF LOW HUMIDITY ON $CO_2$-CAPACITY OF POTASSIUM CARBONATE MODIFIED DOUBLE LAYERED HYDROXIDE

A sample was prepared by impregnating HTC powder with 0.5 $\underline{M}$ $K_2CO_3$ as described in Example 4. The effect of low moisture levels on the $CO_2$ capacity of this sample was determined by measuring its $CO_2$ capacity on the TGA under dry $CO_2$/dry $N_2$ cycling conditions. These results were compared with the $CO_2$ capacity measured under humid $CO_2$/dry $N_2$ cycling conditions. The humid $CO_2$ contained 0.027 bar (20 Torr) of water vapor pressure and was generated by saturating the dry $CO_2$ stream with room temperature water vapor. In this manner, the sample was shown to have an identical capacity of 0.66 mmol $CO_2$/g whether tested under dry or low humidity conditions at 400°C. This example demonstrates that low levels of humidity do not adversely affect the $CO_2$ capacity of the material at elevated temperatures.

## EXAMPLE 6

### PREPARATION AND CHARACTERIZATION OF A POTASSIUM CARBONATE MODIFIED DOUBLE LAYERED HYDROXIDE

Three samples of potassium carbonate modified HTC were prepared by treatment of Alcoa HTC 0.32 cm ((1/8") extruded pellets) with 0.5 $\underline{M}$, 2.0 $\underline{M}$ and 5.0 $\underline{M}$ aqueous solutions of $K_2CO_3$ as described in Example 4. Samples prepared from these solutions were characterized by elemental analysis to contain 3.66, 16.8 and 28.1 weight percent $K_2CO_3$, respectively with Mg to Al ratios of approximately 3.0. These materials were analyzed by TGA to have capacities of 0.28, 0.39 and 0.28 mmol $CO_2$/g, respectively, at 400°C under dry $CO_2$/$N_2$ cycling conditions ($p_{CO_2}$ = 0.667 bar (500 Torr)).

**EXAMPLE 7**

**EFFECT OF STEAM ON CO$_2$-CAPACITY OF POTASSIUM CARBONATE MODIFIED DOUBLE LAYERED HYDROXIDE**

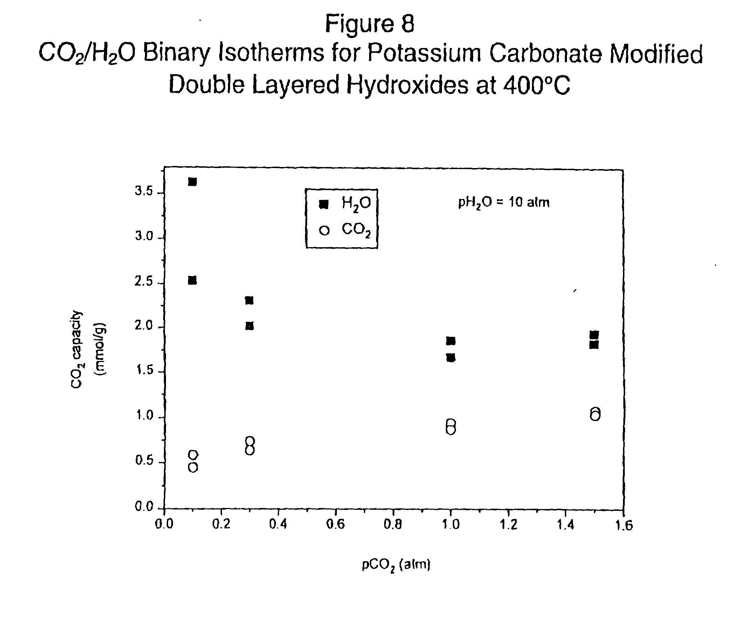

Potassium carbonate modified HTC was prepared by impregnation of the hydrotalcite with 2.0 $\underline{M}$ K$_2$CO$_3$ as described in Example 4. This sample was loaded into a cell contained in a box furnace. The sample was activated at 400°C for two hours under a N$_2$ purge, then saturated by purging with a binary gaseous mixture of 10 atmospheres of H$_2$O and 0.3 atmospheres of CO$_2$ at 400°C for 1 hour. The adsorbed CO$_2$ and H$_2$O were desorbed at 400°C and quantitated by an in-line mass spectrometer. From this experiment the potassium carbonate modified HTC was determined to have a capacity of 0.69 mmol CO$_2$/g of adsorbent in the presence of 10 atmospheres of steam. In order to collect CO$_2$-H$_2$O binary isotherm information under simulated process conditions, the CO$_2$ capacity was measured under CO$_2$ partial pressures ranging from 0.1 to 1.5 atmospheres while holding the water vapor pressure constant at 10 atmospheres. Under these conditions the capacity ranged from 0.52 to 1.06 mmol CO$_2$/g despite the fact that adsorption occurred in a gaseous environment with a large molar excess of H$_2$O over CO$_2$. The CO$_2$/H$_2$O binary isotherms are presented in FIG. 8.

Under 1 atmosphere of dry CO$_2$, the potassium carbonate modified HTC had a capacity of 0.85 mmol/g. The material had similar capacities for CO$_2$ whether saturated with 1 atm of dry CO$_2$ (0.85 mmol CO$_2$/g) or with a binary mixture consisting of 1 atm CO$_2$ and 10 atm H$_2$O (0.89 mmol CO$_2$/g). The presence of water had no significant effect on the capacity of potassium carbonate modified HTC.

**EXAMPLE 8**

**CO$_2$-ADSORPTIVE PROPERTIES OF HYDROTALCITES AND K$_2$CO$_3$**

The CO$_2$ capacities of La Roche HTC, Alcoa HTC, and K$_2$CO$_3$ were determined by TGA under dry CO$_2$/dry N$_2$ cycling conditions. The La Roche HTC and Alcoa HTC had capacities of 0.31 and 0.21 mmol CO$_2$/g, respectively, at 400°C. K$_2$CO$_3$, as described in Example 3, has a a capacity of <0.02 mmol CO$_2$/g under similar conditions. This demonstrates the synergistic effect that some of the modified hydrotalcites have with respect to CO$_2$ adsorption (Examples 4-6) relative to the adsorptive properties of the individual components.

**EXAMPLE 9**

**PREPARATION, CHARACTERIZATION AND ADSORPTIVE PROPERTIES OF MgAl$_2$O$_4$-SPINEL**

MgAl$_2$O$_4$ spinel was identified as one of the decomposition products formed during the prolonged treatment of the potassium carbonate modified HTC with high temperature steam. This spinel component is believed to be responsible for the increased CO$_2$ capacity observed for samples which had undergone extensive steam stability testing. To confirm this hypothesis, pure MgAl$_2$O$_4$ spinel was prepared and characterized. MgAl$_2$O$_4$ was made by the reaction of a ground solid mixture of magnesium and aluminum acetate in the proper molar ratio at 500°C for 4 hours. X-ray diffraction analysis confirmed the formation of a pure spinel product. A portion of this product was modified by treatment with a 2.0 $\underline{M}$ K$_2$CO$_3$ solution and dried at 400°C. The resulting MgAl$_2$O$_4$ and K$_2$CO$_3$ promoted MgAl$_2$O$_4$ had capacities of 0.32 and 0.62 mmol/g, respectively, at 400°C under dry CO$_2$ conditions (P$_{CO2}$ = 500 Torr), confirming that the spinel component was responsible for the observed increased capacities.

The Examples demonstrate that the present invention for operating equilibrium controlled reactions overcomes problems associated with prior art processes wherein product flow rates do not remain constant and the desired products are present in unacceptably low concentrations in the reactor effluent while obtaining high conversion of the product at lower temperatures. Moreover, Applicants' unique series of steps for desorbing the more adsorbable product from the adsorbent residing in the reactor and for preparing the reactor for subsequent process cycles provides outstanding process efficiency and control.

**Claims**

1. A process for operating an equilibrium controlled reaction in a system which comprises a plurality of reactors operated in a predetermined timed sequence wherein the heating and cooling requirements in a moving reaction mass transfer zone within each reactor are provided by indirect heat exchange with a fluid capable of phase change at temperatures maintained in each reactor during the following cydic steps:

(a) reacting a feedstock at a first pressure in a first reactor containing an admixture of an adsorbent and a catalyst suitable for conducting the equilibrium controlled reaction under reaction conditions sufficient to convert the feedstock into a more adsorbable product which is selectively adsorbed by the adsorbent and a less adsorbable product and withdrawing a stream which is enriched in the less adsorbable product and depleted in the more adsorbable product as well as unreacted feedstock;

(b) countercurrently depressurizing the first reactor to a second pressure by withdrawing a mixture comprising unreacted feedstock, a portion of the less adsorbable product and a portion of the more adsorbable product;

(c) countercurrently purging the first reactor at the second pressure with a weakly adsorbing purge fluid with respect to the adsorbent to desorb the more adsorbable product from the adsorbent and withdrawing a mixture comprising unreacted feedstock, a portion of the more adsorbable product and a portion of the less adsorbable product;

(d) countercurrently purging the first reactor at the second pressure with the less adsorbable product to desorb the weakly adsorbing purge fluid and withdrawing a mixture comprising the weakly adsorbing purge fluid, a portion of the more adsorbable product and a portion of the less adsorbable product; and

(e) countercurrently pressurizing the first reactor from the second pressure to the first pressure with the less adsorbable product prior to commencing another process cycle within the first reactor.

2. The process of Claim 1 further comprising:
(f) separating the stream of step (a) which is enriched in the less adsorbable product and depleted in the more adsorbable product as well as unreacted feedstock to form a stream comprising the less adsorbable product.

3. The process of Claim 1 further comprising:
(f) separating the product mixture of step (c) comprising unreacted feedstock, a portion of the more adsorbable product and a portion of the less adsorbable product to form a stream comprising the more adsorbable product.

4. The process of Claim 1 further comprising the following step which is conducted between step (a) and step (b): countercurrently purging the first reactor at the first pressure with a weakly adsorbing purge fluid and withdrawing a mixture comprising unreacted feedstock, a portion of the more adsorbable product and a portion of the less adsorbable product.

5. The process of Claim 4 further comprising separating the mixture comprising unreacted feedstock, a portion of the more adsorbable product and a portion of the less adsorbable product to form a stream comprising unreacted feedstock and recycling a portion of the stream comprising unreacted feedstock for use as feedstock in step (a).

6. The process of Claim 1 further comprising:
(g) separating the mixture of step (d) comprising the weakly adsorbable purge fluid, a portion of the more adsorbable product and a portion of the less adsorbable product to form a stream comprising the weakly adsorbable purge fluid and recycling a portion of the stream for use as the weakly adsorbing purge fluid in step (c).

7. The process of Claim 1 wherein the admixture of the adsorbent and the catalyst comprises from 5% to 95% by weight of the adsorbent and from 95% to 5% by weight of the catalyst.

8. The process of Claim 1 wherein the feedstock comprises carbon dioxide and hydrogen, the more adsorbable product with respect to the adsorbent is water and the less adsorbable product is carbon monoxide.

9. The process of Claim 8 wherein the fluid capable of phase change is selected from the group consisting of a eutetic mixture of diphenyl oxide and biphenyl oxide and steam.

10. The process of Claim 8 wherein the reaction catalyst comprises a water gas shift catalyst and the reaction conditions comprise a temperature ranging from 200° to 600°C, the first pressure which ranges from 2 to 50 bar and the second pressure which ranges from 0.05 bar to 2 bar.

11. The process of Claim 8 wherein the adsorbent comprises a zeolite, alumina or silica gel and the weakly adsorbing purge fluid is selected from the group consisting of methane, hydrogen, nitrogen and carbon dioxide.

12. The process of Claim 1 wherein the feedstock comprises water and methane in a ratio of water to methane ranging from 1.5 to 30, the more adsorbable product with respect to the adsorbent is carbon dioxide and the less adsorbable product is hydrogen.

**13.** The process of Claim 12 wherein the fluid capable of a phase change is selected from the group consisting of a eutectic mixture of biphenyl oxide and diphenyl oxide and dimethylpolysiloxane.

**14.** The process of Claim 12 wherein the reaction catalyst comprises a steam-methane reforming catalyst and the reaction conditions comprise a temperature ranging from 200° to 600°C, the first pressure which ranges from 2 to 50 bar and the second pressure which ranges from 0.05 bar to 2 bar.

**15.** The process of Claim 12 wherein the adsorbent comprises a metal oxide or a potassium modified double layered hydroxide and the weakly adsorbing fluid is selected from the group consisting of methane, steam, hydrogen, nitrogen and carbon monoxide.

**16.** The process of Claim 1 wherein the feedstock comprises methane and water in a stoichiometric ratio of water to methane ranging from 1 to 1.5, the more adsorbable product with respect to the adsorbent is carbon monoxide and the less adsorbable product is hydrogen.

**17.** The process of Claim 16 wherein fluid capable of phase change is selected from the group consisting of a eutectic mixture of biphenyl oxide and diphenyl oxide and dimethylpolysiloxane.

**18.** The process of Claim 16 wherein the reaction catalyst comprises a steam-methane reforming catalyst and the reaction conditions comprise a temperature ranging from 200° to 600°C , the first pressure which ranges from 2 to 50 bar and the second pressure which ranges from 0.05 bar to 2 bar.

**19.** The process of Claim 16 wherein the adsorbent comprises a monovalent silver or copper compound which is supported on a high surface area substrate and the weakly adsorbing fluid is selected from the group consisting of methane, water, hydrogen, nitrogen and carbon dioxide.

**20.** The process of Claim 1 wherein the feedstock comprises carbon dioxide and methane, the catalyst comprises a methane reforming catalyst, the more adsorbable product with respect to the adsorbent is hydrogen and the less adsorbable product is carbon monoxide.

**21.** The process of Claim 20 wherein the fluid capable of phase change is selected from the group consisting of a eutectic mixture of biphenyl oxide and diphenyl oxide and dimethylpolysiloxane

**22.** The process of Claim 20 wherein the reaction conditions comprise a temperature ranging from 200° to 600°C, the first pressure which ranges from 2 to 50 bar and the second pressure which ranges from 0.05 to 2 bar.

**23.** The process of Claim 20 wherein the adsorbent comprises a hydrogen complexing metal alloy and the weakly adsorbing fluid is selected from the group consisting of methane, steam, carbon dioxide, carbon monoxide and nitrogen.

**24.** The process of Claim 1 wherein the feedstock comprises carbon dioxide and methane, the catalyst comprises a methane reforming catalyst, the more adsorbable product with respect to the adsorbent is carbon monoxide and the less adsorbable product is hydrogen.

**25.** The process of Claim 24 wherein the fluid capable of phase change is selected from the group consisting of a eutectic mixture of biphenyl oxide and diphenyl oxide and dimethylpolysiloxane.

**26.** The process of Claim 24 wherein the reaction conditions comprise a temperature ranging from 200° to 600°C, the first pressure which ranges from 2 to 50 bar and the second pressure which ranges from 0.05 to 2 bar.

**27.** The process of Claim 24 wherein the adsorbent comprises a $Cu^+$ or $Ag^+$ salt and the weakly adsorbing fluid is selected from the group consisting of hydrogen, nitrogen, methane, carbon dioxide and steam.

**Patentansprüche**

**1.** Verfahren zum Betreiben einer gleichgewichtskontrollierten Reaktion in einem System, welches mehrere Reaktoren umfasst, die in einer vorbestimmten, zeitlich abgestimmten Abfolge betrieben werden, wobei der Erwärmungs- und Kühlbedarf in einer sich bewegenden Reaktionsmassentransfer bzw. Stoffübergangszone in jedem Reaktor bereitgestellt wird durch indirekten Wärmetausch mit einem Fluid, das dazu in der Lage ist, bei Temperaturen einen Phasenübergang durchzuführen, die in jedem Reaktor während der folgenden Zyklusschritte aufrechterhalten werden:

(a) Reagieren eines Ausgangsmaterials bei einem ersten Druck in einem ersten Reaktor, der ein Gemisch eines Adsorptionsmittels und eines Katalysators enthält, das geeignet ist, um die gleichgewichtskontrollierte Reaktion unter Reaktionsbedingungen durchzuführen, die ausreichen, um das Ausgangsmaterial in ein besser adsorbierbares Produkt, welches selektiv durch das Adsorptionsmittel adsorbiert wird, und ein schlechter adsorbierbares Produkt umzuwandeln, und Abziehen eines Stromes, welcher hinsichtlich des schlechter adsorbierbaren Produktes angereichert und hinsichtlich des besser adsorbierbaren Produktes abgereichert ist, sowie unreagierten Ausgangsmaterials;

(b) Gegenstrom-Druckentlastung des ersten Reaktors auf einen zweiten Druck durch das Abziehen eines Gemisches, das unreagiertes Ausgangsmaterial, einen Anteil des schlechter adsorbierbaren Produktes und einen Anteil des besser adsorbierbaren Produktes umfasst;

(c) Gegenstrom-Reinigen bzw. -Spülen des ersten Reaktors beim zweiten Druck mit einem in Hinsicht auf das Adsorptionsmittel schwach adsorbierenden Spül- bzw. Reinigungsfluid, um das besser adsorbierbare Produkt von dem Adsorptionsmittel zu desorbieren, und Abziehen eines Gemisches, welches unreagiertes Ausgangsmaterial, einen Anteil des besser adsorbierbaren Produktes und einen Anteil des schlechter adsorbierbaren Produktes umfasst;

(d) Gegenstrom-Reinigen bzw. -Spülen des ersten Reaktors beim zweiten Druck mit dem schlechter adsorbierbaren Produkt, um das schwach adsorbierende Spül- bzw. Reinigungsfluid zu desorbieren, und Abziehen eines Gemisches, welches das schwach adsorbierende Reinigungsfluid, einen Anteil des besser adsorbierbaren Produktes und einen Anteil des schlechter adsorbierbaren Produktes umfasst; und

(e) Gegenstrom-Druckerhöhung des ersten Reaktors vom zweiten Druck auf den ersten Druck mit dem schlechter adsorbierbaren Produkt vor dem Beginn eines weiteren Verfahrenszyklus im ersten Reaktor.

2. Verfahren nach Anspruch 1, welches ferner aufweist:
(f) Trennen des Stromes aus Schritt (a), welcher in Hinsicht auf das schlechter adsorbierbare Produkt angereichert und in Hinsicht auf das besser adsorbierbare Produkt abgereichert ist, sowie unreagierten Ausgangsmaterials, um einen Strom auszubilden, der das schlechter adsorbierbare Produkt aufweist.

3. Verfahren nach Anspruch 1, das ferner umfasst:
(a) Trennen des Produktgemisches aus Schritt (c), welches unreagiertes Ausgangsmaterial, einen Anteil des besser adsorbierbaren Produktes und einen Anteil des schlechter adsorbierbaren Produktes aufweist, um einen Strom auszubilden, der das besser adsorbierbare Produkt aufweist.

4. Verfahren nach Anspruch 1, das ferner den folgenden Schritt umfasst, der zwischen dem Schritt (a) und dem Schritt (b) durchgeführt wird: Gegenstrom-Spülen bzw. Reinigen des ersten Reaktors beim ersten Druck mit einem schwach adsorbierenden Spül- bzw. Reinigungsfluid und Abziehen eines Gemisches, das unreagiertes Ausgangsmaterial, einen Anteil des besser adsorbierbaren Produktes und einen Anteil des schlechter adsorbierbaren Produktes umfasst.

5. Verfahren nach Anspruch 4, das ferner umfasst: Das Zerlegen des Gemisches aus unreagiertem Ausgangsmaterial, einem Anteil des besser adsorbierbaren Produktes und einem Anteil des schlechter adsorbierbaren Produktes, um einen Strom auszubilden, der unreagiertes Ausgangsmaterial aufweist, und Zurückführen eines Anteils des Stromes mit dem unreagiertem Ausgangsmaterial zur Verwendung als Ausgangsmaterial im Schritt (a).

6. Verfahren nach Anspruch 1, das ferner umfasst:
(b) Zerlegen des Gemisches aus Schritt (d) mit dem schwach adsorbierbaren Reinigungsfluid, einem Anteil des besser adsorbierbaren Produktes und einem Anteil des schlechter adsorbierbaren Produktes, um einen Strom auszubilden, der das schwach adsorbierbare Reinigungsfluid aufweist, und Zurückführen eines Anteils des Stromes zur Verwendung als schwach adsorbierendes Reinigungsfluid im Schritt (c).

7. Verfahren nach Anspruch 1, bei dem das Gemisch aus dem Adsorptionsmittel und dem Katalysator von 5 bis 95 Gew.-% des Adsorptionsmittels umfasst und von 95 bis 5 Gew.-% des Katalysators.

8. Verfahren nach Anspruch 1, bei dem das Ausgangsmaterial Kohlendioxid und Wasserstoff aufweist, wobei das besser adsorbierbare Produkt in Hinsicht auf das Adsorptionsmittel Wasser ist und das schlechter adsorbierbare Produkt Kohlenmonoxid ist.

9. Verfahren nach Anspruch 8, bei dem das Fluid, das dazu in der Lage ist, einen Phasenübergang durchzuführen, aus der Gruppe ausgewählt wird, die aus einem eutektischen Gemisch von Diphenyloxid und Biphenyloxid und Dampf besteht.

10. Verfahren nach Anspruch 8, bei dem der Reaktionskatalysator einen Wasser-Gas-Umwandlungskatalysator umfasst und die Reaktionsbedingungen eine Temperatur im Bereich von 200° bis 600 °C aufweist, wobei der erste Druck im Bereich von 2 bis 50 bar und der zweite Druck im Bereich von 0,05 bis 2 bar liegt.

11. Verfahren nach Anspruch 8, bei dem das Adsorptionsmittel einen Zeolithen, Aluminiumoxid oder Siliziumoxid-Gel aufweist und das schwach adsorbierende Reinigungsmittel aus der Gruppe ausgewählt wird, die aus Methan, Wasserstoff, Stickstoff und Kohlendioxid besteht.

12. Verfahren nach Anspruch 1, bei dem das Ausgangsmaterial Wasser und Methan in einem Verhältnis von Wasser zu Methan aufweist, das im Bereich von 1,5 bis 30 liegt, wobei das besser adsorbierbare Produkt hinsichtlich des Adsorptionsmittels Kohlendioxid ist und das schlechter adsorbierbare Produkt Wasserstoff ist.

13. Verfahren nach Anspruch 12, bei dem das Fluid, das dazu in der Lage ist, einen Phasenübergang durchzuführen, aus der Gruppe ausgewählt wird, die aus einem eutektischen Gemisch aus Biphenyloxid und Diphenyloxid und Dimethylpolysiloxan besteht.

14. Verfahren nach Anspruch 12, bei dem der Reaktionskatalysator einen Dampf-Methan-Reformierungskatalysator aufweist und die Reaktionsbedingungen eine Temperatur umfassen, die im Bereich von 200° bis 600 °C liegt, wobei der erste Druck im Bereich von 2 bis 50 bar und der zweite Druck im Bereich von 0,05 bis 2 bar liegt.

15. Verfahren nach Anspruch 12, bei dem das Adsorptionsmittel ein Metalloxid oder ein modifiziertes Kalium-Doppelschichthydroxid umfasst und das schwach adsorbierende Fluid ausgewählt wird aus der Gruppe, die besteht aus Methan, Dampf, Wasserstoff, Stickstoff und Kohlenmonoxid.

16. Verfahren nach Anspruch 1, bei dem das Ausgangsmaterial Methan und Wasser in einem stöchiometrischen Verhältnis von Methan und Wasser im Bereich von 1 bis 1,5 aufweist, wobei das besser adsorbierbare Produkt hinsichtlich des Adsorptionsmittels Kohlenmonoxid ist und das schlechter adsorbierbare Produkt Wasserstoff ist.

17. Verfahren nach Anspruch 16, bei dem das Fluid, das dazu in der Lage ist, einen Phasenübergang durchzuführen, aus der Gruppe ausgewählt wird, die aus einem eutektischen Gemisch von Biphenyloxid und Diphenyloxid und Dimethylpolysiloxan besteht.

18. Verfahren nach Anspruch 16, bei dem der Reaktionskatalysator einen Dampf-Methan-Reformierungskatalysator umfasst und die Reaktionsbedingungen eine Temperatur aufweist, die im Bereich von 200° bis 600 °C liegt, wobei der erste Druck im Bereich von 2 bis 50 bar und der zweite Druck im Bereich von 0,05 bis 2 bar liegt.

19. Verfahren nach Anspruch 16, bei dem das Adsorptionsmittel eine einwertige Silber- oder Kupferverbindung umfasst, welche auf einem Substrat mit großer Oberfläche gehalten ist, und das schwach adsorbierbare Fluid aus der Gruppe ausgewählt wird, die aus Methan, Wasser, Wasserstoff, Stickstoff und Kohlendioxid besteht.

20. Verfahren nach Anspruch 1, bei dem das Ausgangsmaterial Kohlendioxid und Methan aufweist, wobei der Katalysator einen Methan-Reformierungskatalysator umfasst und das besser adsorbierbare Produkt hinsichtlich des Adsorptionsmittels Wasserstoff und das schlechter adsorbierbare Produkt Kohlenmonoxid ist.

21. Verfahren nach Anspruch 20, bei dem das Fluid, das dazu in der Lage ist, einen Phasenübergang durchzuführen, aus der Gruppe ausgewählt wird, die aus einem eutektischen Gemisch von Biphenyloxid und Diphenyloxid und Dimethylpolysiloxan besteht.

22. Verfahren nach Anspruch 20, bei dem die Reaktionsbedingungen eine Temperatur im Bereich von 200° bis 600 °C umfassen, wobei der erste Druck im Bereich von 2 bis 50 bar und der zweite Druck im Bereich von 0,05 bis 2 bar liegt.

**23.** Verfahren nach Anspruch 20, bei dem das Adsorptionsmittel eine Wasserstoffkomplexbildende Metalllegierung umfasst und das schwach adsorbierende Reinigungsfluid aus der Gruppe ausgewählt wird, die aus Methan, Dampf, Kohlendioxid, Kohlenmonoxid und Stickstoff besteht.

**24.** Verfahren nach Anspruch 1, bei dem das Ausgangsmaterial Kohlendioxid und Methan aufweist, und der Katalysator einen Methanreformierungskatalysator umfasst, wobei das besser adsorbierbare Produkt hinsichtlich des Adsorptionsmittels Kohlenmonoxid ist und das schlechter adsorbierbare Produkt Wasserstoff ist.

**25.** Verfahren nach Anspruch 24, bei dem das Fluid, das dazu in der Lage ist, einen Phasenübergang durchzuführen, aus der Gruppe ausgewählt wird, die aus einem eutektischen Gemisch von Biphenyloxid und Diphenyloxid und Dimethylpolysiloxan besteht.

**26.** Verfahren nach Anspruch 24, bei dem die Reaktionsbedingungen eine Temperatur im Bereich von 200° bis 600 °C umfassen, wobei der erste Druck im Bereich von 2 bis 50 bar und der zweite Druck im Bereich von 0,05 bis 2 bar liegt.

**27.** Verfahren nach Anspruch 24, bei dem das Adsorptionsmittel $Cu^+$- oder $Ag^+$-Salz umfasst und das schwach adsorbierende Fluid aus der Gruppe ausgewählt wird, die aus Wasserstoff, Stickstoff, Methan, Kohlendioxid und Dampf besteht.

## Revendications

**1.** Procédé pour conduire une réaction contrôlée par l'équilibre dans un système qui comprend une pluralité de réacteurs fonctionnant en une succession synchronisée prédéterminée où les besoins en chauffage et en refroidissement dans une zone de transfert de masse et de réaction mobile dans chaque réacteur sont satisfaits par échange de chaleur indirect avec un fluide capable de changer de phase aux températures maintenues dans chaque réacteur pendant les étapes cycliques suivantes:

(a) réaction d'une charge à une première pression dans un premier réacteur contenant un mélange d'un adsorbant et d'un catalyseur approprié à la conduite de la réaction contrôlée par l'équilibre dans des conditions de réaction suffisantes pour convertir la charge en un produit plus adsorbable qui est adsorbé sélectivement par l'adsorbant et en un produit moins adsorbable et retrait d'un courant qui est enrichi en le produit moins adsorbable et appauvri en le produit plus adsorbable et de charge qui n'a pas réagi;

(b) réduction de la pression du premier réacteur à contre-courant jusqu'à une seconde pression par retrait d'un mélange comprenant de la charge qui n'a pas réagi, une partie du produit moins adsorbable et une partie du produit plus adsorbable;

(c) purge à contre-courant du premier réacteur à la seconde pression avec un fluide de purge à faible adsorption concernant l'adsorbant pour désorber le produit plus adsorbable de l'adsorbant et retrait d'un mélange comprenant de la charge qui n'a pas réagi, une partie du produit plus adsorbable et une partie du produit moins adsorbable;

(d) purge à contre-courant du premier réacteur à la seconde pression avec le produit moins adsorbable pour désorber le fluide de purge à faible adsorption et retrait d'un mélange comprenant le fluide de purge à faible adsorption, une partie du produit plus adsorbable et une partie du produit moins adsorbable; et

(e) augmentation de la pression du premier réacteur à contre-courant de la seconde pression à la première pression avec le produit moins adsorbable avant le début d'un autre cycle de procédé dans le premier réacteur.

**2.** Procédé selon la revendication 1 comprenant en outre:

(f) la séparation du courant de l'étape (a) qui est enrichi en le produit moins adsorbable et appauvri en le produit plus adsorbable et de charge qui n'a pas réagi pour former un courant comprenant le produit moins adsorbable.

**3.** Procédé selon la revendication 1 comprenant en outre:

(f) la séparation du mélange de produits de l'étape (c) comprenant de la charge qui n'a pas réagi, une partie du produit plus adsorbable et une partie du produit moins adsorbable pour former un courant comprenant le produit plus adsorbable.

**4.** Procédé selon la revendication 1 comprenant en outre l'étape suivante qui est réalisée entre l'étape (a) et l'étape (b): purge à contre-courant du premier réacteur à la première pression avec un fluide de purge à faible adsorption et retrait d'un mélange comprenant de la charge qui n'a pas réagi, une partie du produit plus adsorbable et une partie du produit moins adsorbable.

5. Procédé selon la revendication 4 comprenant en outre la séparation du mélange comprenant de la charge qui n'a pas réagi, une partie du produit plus adsorbable et une partie du produit moins adsorbable pour former un courant comprenant de la charge qui n'a pas réagi et le recyclage d'une partie du courant comprenant de la charge qui n'a pas réagi pour l'utiliser comme charge dans l'étape (a).

6. Procédé selon la revendication 1 comprenant en outre:
    (g) la séparation du mélange de l'étape (d) comprenant le fluide de purge faiblement adsorbable, une partie du produit plus adsorbable et une partie du produit moins adsorbable pour former un courant comprenant le fluide de purge faiblement adsorbable et le recyclage d'une partie du courant pour l'utiliser comme fluide de purge à faible adsorption dans l'étape (c).

7. Procédé selon la revendication 1 où le mélange de l'adsorbant et du catalyseur comprend de 5% à 95% en masse d'adsorbant et de 95% à 5% en masse de catalyseur.

8. Procédé selon la revendication 1 où la charge comprend du dioxyde de carbone et de l'hydrogène, le produit plus adsorbable concernant l'adsorbant est l'eau et le produit moins adsorbable est le monoxyde de carbone.

9. Procédé selon la revendication 8 où le fluide capable de changer de phase est choisi dans le groupe consistant en un mélange eutectique d'oxyde de diphényle et d'oxyde de biphényle et la vapeur.

10. Procédé selon la revendication 8 où le catalyseur de la réaction comprend un catalyseur de réaction de conversion déplacée du gaz à l'eau et les conditions de la réaction comprennent une température de 200° à 600°C, la première pression qui est de 2 à 50 bar et la seconde pression qui est de 0,05 bar à 2 bar.

11. Procédé selon la revendication 8 où l'adsorbant comprend une zéolite, de l'alumine ou du gel de silice et le fluide de purge à faible adsorption est choisi dans le groupe consistant en le méthane, l'hydrogène, l'azote et le dioxyde de carbone.

12. Procédé selon la revendication 1 où la charge comprend de l'eau et du méthane dans un rapport de l'eau au méthane de 1,5 à 30, le produit plus adsorbable concernant l'adsorbant est le dioxyde de carbone et le produit moins adsorbable est l'hydrogène.

13. Procédé selon la revendication 12 où le fluide capable de changer de phase est choisi dans le groupe consistant en un mélange eutectique d'oxyde de biphényle et d'oxyde de diphényle et le diméthylpolysiloxane.

14. Procédé selon la revendication 12 où le catalyseur de la réaction comprend un catalyseur de reformage du méthane à la vapeur et les conditions de la réaction comprennent une température de 200° à 600°C, la première pression qui est de 2 à 50 bar et la seconde pression qui est de 0,05 bar à 2 bar.

15. Procédé selon la revendication 12 où l'adsorbant comprend un oxyde métallique ou un hydroxyde à double couche modifié par le potassium et le fluide à faible adsorption est choisi dans le groupe consistant en le méthane, la vapeur, l'hydrogène, l'azote et le monoxyde de carbone.

16. Procédé selon la revendication 1 où la charge comprend du méthane et de l'eau dans un rapport stoechiométrique de l'eau au méthane de 1 à 1,5 le produit plus adsorbable concernant l'adsorbant est le monoxyde de carbone et le produit moins adsorbable est l'hydrogène.

17. Procédé selon la revendication 16 où le fluide capable de changer de phase est choisi dans le groupe consistant en un mélange eutectique d'oxyde de biphényle et d'oxyde de diphényle et le diméthylpolysiloxane.

18. Procédé selon la revendication 16 où le catalyseur de la réaction comprend un catalyseur de reformage du méthane à la vapeur et les conditions de la réaction comprennent une température de 200° à 600°C, la première pression qui est de 2 à 50 bar et la seconde pression qui est de 0,05 bar à 2 bar.

**19.** Procédé selon la revendication 16 où l'adsorbant comprend un composé de l'argent ou du cuivre monovalent qui est supporté sur un substrat de grande superficie et le fluide à faible adsorption est choisi dans le groupe consistant en le méthane, l'eau, l'hydrogène, l'azote et le dioxyde de carbone.

**20.** Procédé selon la revendication 1 où la charge comprend du dioxyde de carbone et du méthane, le catalyseur comprend un catalyseur de reformage du méthane, le produit plus adsorbable concernant l'adsorbant est l'hydrogène et le produit moins adsorbable est le monoxyde de carbone.

**21.** Procédé selon la revendication 20 où le fluide capable de changer de phase est choisi dans le groupe consistant en un mélange eutectique d'oxyde de biphényle et d'oxyde de diphényle et le diméthylpolysiloxane.

**22.** Procédé selon la revendication 20 où les conditions de la réaction comprennent une température de 200° à 600°C, la première pression qui est de 2 à 50 bar et la seconde pression qui est de 0,05 à 2 bar.

**23.** Procédé selon la revendication 20 où l'adsorbant comprend un alliage métallique complexant l'hydrogène et le fluide à faible adsorption est choisi dans le groupe consistant en le méthane, la vapeur, le dioxyde de carbone, le monoxyde de carbone et l'azote.

**24.** Procédé selon la revendication 1 où la charge comprend du dioxyde de carbone et du méthane, le catalyseur comprend un catalyseur de reformage du méthane, le produit plus adsorbable concernant l'adsorbant est le monoxyde de carbone et le produit moins adsorbable est l'hydrogène.

**25.** Procédé selon la revendication 24 où le fluide capable de changer de phase est choisi dans le groupe consistant en un mélange eutectique d'oxyde de biphényle et d'oxyde de diphényle et le diméthylpolysiloxane.

**26.** Procédé selon la revendication 24 où les conditions de la réaction comprennent une température de 200° à 600°C, la première pression qui est de 2 à 50 bar et la seconde pression qui est de 0,05 à 2 bar.

**27.** Procédé selon la revendication 24 où l'adsorbant comprend un sel de Cu$^+$ ou d'Ag$^+$ et le fluide à faible adsorption est choisi dans le groupe consistant en l'hydrogène, l'azote, le méthane, le dioxyde de carbone et la vapeur.

FIG. 1

$A+B \longrightarrow C+D$

EP 0 737 646 B1

FIG. 2

EP 0 737 646 B1

FIG. 3

FIG. 4

FIG. 5

EP 0 737 646 B1

FIG. 6

*FIG. 7*

## Figure 8
## CO₂/H₂O Binary Isotherms for Potassium Carbonate Modified
## Double Layered Hydroxides at 400°C